(19)

Europäisches Patentamt

European Patent Office

Office européen des brevets

(11) **EP 4 518 466 A1**

(12) **EUROPEAN PATENT APPLICATION**
published in accordance with Art. 153(4) EPC

(43) Date of publication:
05.03.2025 Bulletin 2025/10

(21) Application number: 23796859.9

(22) Date of filing: 27.04.2023

(51) International Patent Classification (IPC):
$H04W\ 64/00^{(2009.01)}$    $H04W\ 24/08^{(2009.01)}$
$H04W\ 72/0457^{(2023.01)}$    $H04L\ 5/00^{(2006.01)}$
$G01S\ 19/44^{(2010.01)}$

(52) Cooperative Patent Classification (CPC):
G01S 19/44; H04L 5/00; H04W 24/08; H04W 64/00;
H04W 72/0457

(86) International application number:
PCT/KR2023/005802

(87) International publication number:
WO 2023/211217 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.04.2022 US 202263336275 P
16.02.2023 US 202363446335 P

(71) Applicant: LG Electronics Inc.
Yeongdeungpo-gu
Seoul 07336 (KR)

(72) Inventors:
• SHIM, Jaenam
  Seoul 06772 (KR)
• KO, Hyunsoo
  Seoul 06772 (KR)
• HWANG, Seunggye
  Seoul 06772 (KR)
• KIM, Seonwook
  Seoul 06772 (KR)
• LEE, Jeongsu
  Seoul 06772 (KR)

(74) Representative: Plasseraud IP
104 Rue de Richelieu
CS92104
75080 Paris Cedex 02 (FR)

(54) **METHOD FOR TERMINAL CARRYING OUT MEASUREMENT FOR POSITIONING IN WIRELESS COMMUNICATION SYSTEM AND DEVICE THEREFOR**

(57) Disclosed, according to various embodiments, are a method for a terminal carrying out measurement for positioning in a wireless communication system and a device therefor. Disclosed are a method and a device therefor, the method comprising the steps of: receiving configuration information related to location measurement from a network; carrying out measurement for at least one measurement frequency on the basis of the configuration information; and reporting a measurement result of the at least one measurement frequency to the network, wherein a terminal specifies a plurality of measurement frequencies for carrier phase positioning (CPP) on the basis of the configuration information, and determines the at least one measurement frequency on the basis of the plurality of measurement frequencies, and the measurement result includes phase information measured for the at least one measurement frequency.

FIG. 11

**Description**

**TECHNICAL FIELD**

The present disclosure relates to a method of performing positioning of a user equipment (UE) based on phase information measured by the UE in a wireless communication system and apparatus therefor.

**BACKGROUND**

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

**DISCLOSURE**

**TECHNICAL PROBLEM**

The present disclosure is to provide a method by which a user equipment (UE) receives from a network an indication regarding multiple measurement frequencies for phase measurement, receives a configuration of an active downlink bandwidth part (BWP) based on the multiple measurement frequencies, and performs accurate and efficient phase measurement to carry out positioning of the UE based on the measurements and apparatus therefor.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

**TECHNICAL SOLUTION**

In an aspect of the present disclosure, provided herein is a method of performing positioning measurement by a user equipment (UE) in a wireless communication system. The method includes: receiving configuration information related to position measurement from a network; performing measurement on at least one measurement frequency based on the configuration information; and reporting measurement results for the at least one measurement frequency to the network. The UE may specify a plurality of measurement frequencies for carrier phase positioning (CPP) based on the configuration information and determine the at least one measurement frequency based on the plurality of measurement frequencies, and the measurement results may include phase information measured for the at least one measurement frequency.

The plurality of measurement frequencies may be specified by a reference measurement frequency and a plurality of measurement frequency offsets indicated based on the configuration information.

The reference measurement frequency may be specified based on a starting physical resource block (PRB) of a positioning reference signal (PRS) or an absolute radio frequency channel number (ARFCN) related to a PRS configuration included in the configuration information.

The reference measurement frequency may be specified based on a frequency of a direct current (DC) carrier related to a downlink or uplink signal.

The reference measurement frequency may be determined based on indices of resource elements (REs) included in the PRS configuration included in the configuration information.

The at least one measurement frequency may be determined based on at least one of the plurality of measurement frequencies, an active downlink bandwidth part (BWP) configured for the UE, or a measurement gap.

Based on that the plurality of measurement frequencies are specified as not included in the active downlink BWP, the at least one measurement frequency may be determined as a predefined measurement frequency rather than based on the plurality of measurement frequencies.

The predefined measurement frequency may be a frequency within the active downlink BWP that has an integer multiple relationship with one of the plurality of measurement frequencies or a frequency within the active downlink BWP that is closest to the plurality of measurement frequencies.

The predefined measurement frequency may be a lowest frequency within the active downlink BWP or a highest frequency within the active downlink BWP.

The at least one measurement frequency may be determined differently based on whether measurement for the at least one measurement frequency is performed within the measurement gap.

In another aspect of the present disclosure, provided herein is a UE configured to perform positioning measurement in a wireless communication system. The UE includes: a radio frequency (RF) transceiver; and a processor connected to the RF transceiver. The processor is configured to: control the RF transceiver to receive configuration information related to position measurement from a network; perform measurement on at least one measurement frequency based on the configuration information; and report measurement results for the at least one measurement frequency to the network. The at least one measurement frequency may be determined based on a plurality of measurement frequencies for CPP specified based on the configuration information, and the measurement results may include phase information measured for the at least one measurement frequency.

In another aspect of the present disclosure, provided herein is a method of receiving, by a network, measurement results for positioning from a UE in a wireless communication system. The method includes: transmitting configuration information related to position measurement; and receiving measurement results for at least one measurement frequency measured based on the configuration information. The configuration information may indicate a plurality of measurement frequencies for CPP, and the measurement results may include phase information measured for the at least one measurement frequency determined based on the plurality of measurement frequencies.

The network may configure an active downlink BWP for the UE such that the active downlink BWP includes the plurality of measurement frequencies.

In another aspect of the present disclosure, provided herein is a chipset configured to perform positioning measurement for a UE in a wireless communication system. The chipset includes: at least one processor; and at least one memory operably connected to the at least one processor and configured to, when executed, cause the at least one processor to perform operations. The operations include: receiving configuration information related to position measurement from a network; performing measurement on at least one measurement frequency based on the configuration information; and reporting measurement results for the at least one measurement frequency to the network. The at least one measurement frequency may be determined based on a plurality of measurement frequencies for CPP specified based on the configuration information, and the measurement results may include phase information measured for the at least one measurement frequency.

In a further aspect of the present disclosure, provided herein is a computer-readable storage medium including at least one computer program in a wireless communication system. The at least one computer program is configured to cause at least one processor to perform operations related to positioning measurement for a UE. The at least one computer program is stored on the computer-readable storage medium. The operations include: receiving configuration information related to position measurement; performing measurement on at least one measurement frequency based on the configuration information; and reporting measurement results for the at least one measurement frequency. The at least one measurement frequency may be determined based on a plurality of measurement frequencies for CPP specified based on the configuration information, and the measurement results may include phase information measured for the at least one measurement frequency.

ADVANTAGEOUS EFFECTS

According to various embodiments of the present disclosure, a user equipment (UE) may receive from a network an indication regarding multiple measurement frequencies for phase measurement and select a measurement frequency suitable for the channel conditions of the UE from among the indicated multiple measurement frequencies, or the UE may be configured with an active downlink bandwidth part (BWP) based on the multiple measurement frequencies, thereby enabling phase measurement on a measurement frequency that ensures high accuracy and efficiency for positioning of the UE.

Effects to be achieved by embodiment(s) are not limited to what has been particularly described hereinabove and other effects not mentioned herein will be more clearly understood by persons skilled in the art to which embodiment(s) pertain from the following detailed description.

**BRIEF DESCRIPTION OF THE DRAWINGS**

The accompanying drawings, which are included to provide a further understanding of the disclosure and are incorporated in and constitute a part of this application, illustrate embodiments of the disclosure and together with the description serve to explain the principle of the disclosure.

FIG. 1 illustrates the structure of an LTE system to which embodiment(s) are applicable.

FIG. 2 illustrates the structure of an NR system to which embodiment(s) are applicable.

FIG. 3 illustrates the structure of an NR radio frame to which embodiment(s) are applicable.

FIG. 4 illustrates the slot structure of an NR frame to which embodiment(s) are applicable.

FIG. 5 is a diagram illustrating physical channels and a signal transmission method using the physical channels, which may be used in the embodiment;

FIG. 6 is a diagram illustrating a positioning protocol configuration for positioning a user equipment (UE), to which various embodiments are applicable.

FIG. 7 illustrates an exemplary system architecture for measuring positioning of a UE to which various embodiments are applicable.

FIG. 8 illustrates an implementation example of a network for UE positioning.

FIG. 9 is a diagram illustrating protocol layers for supporting LTE positioning protocol (LPP) message transmission, to which various embodiments are applicable.

FIG. 10 is a diagram illustrating protocol layers for supporting NR positioning protocol a (NRPPa) protocol data unit (PDU) transmission, to which various embodiments are applicable.

FIG. 11 is a diagram illustrating an observed time difference of arrival (OTDOA) positioning method, to which various embodiments are applicable.

FIG. 12 is a diagram for explaining a method by which a user equipment (UE) performs phase measurement for positioning according to an embodiment.

FIG. 13 is a diagram for explaining a method by which a network receives measurement results for positioning from a UE.

FIG. 14 illustrates a communication system applied to the present disclosure;

FIG. 15 illustrates wireless devices applicable to the present disclosure.

FIG. 16 illustrates another example of a wireless device to which the present disclosure is applied.

**DETAILED DESCRIPTION**

Various embodiments are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

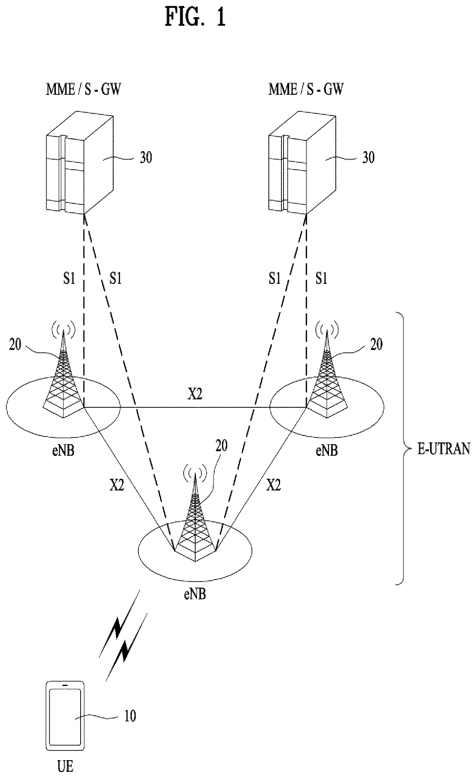

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

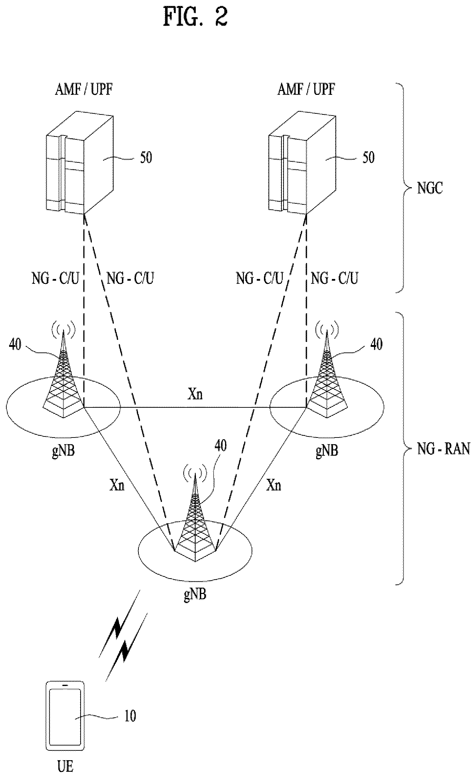

FIG. 2 illustrates the structure of a NR system.

Referring to FIG. 2, a next generation radio access network (NG-RAN) may include a next generation Node B (gNB) and/or an eNB, which provides user-plane and control-plane protocol termination to a UE. In FIG. 2, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

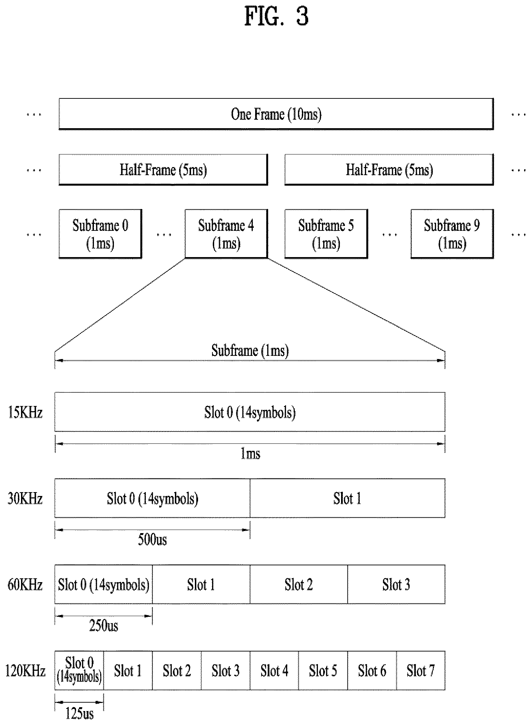

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame}_{slot}$, and the number of slots per subframe $N^{subframe,u}_{slot}$ according to an SCS configuration $\mu$ in the NCP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |

(continued)

| SCS (15*2$^u$) | N$^{slot}_{symb}$ | N$^{frame,u}_{slot}$ | N$^{subframe,u}_{slot}$ |
|---|---|---|---|
| 240KHz (u=4) | 14 | 160 | 16 |

Table 2 below lists the number of symbols per slot, the number of slots per frame, and the number of slots per subframe according to an SCS in the ECP case.

[Table 2]

| SCS (15*2$^u$) | N$^{slot}_{symb}$ | N$^{frame,u}_{slot}$ | N$^{subframe,u}_{slot}$ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description). In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

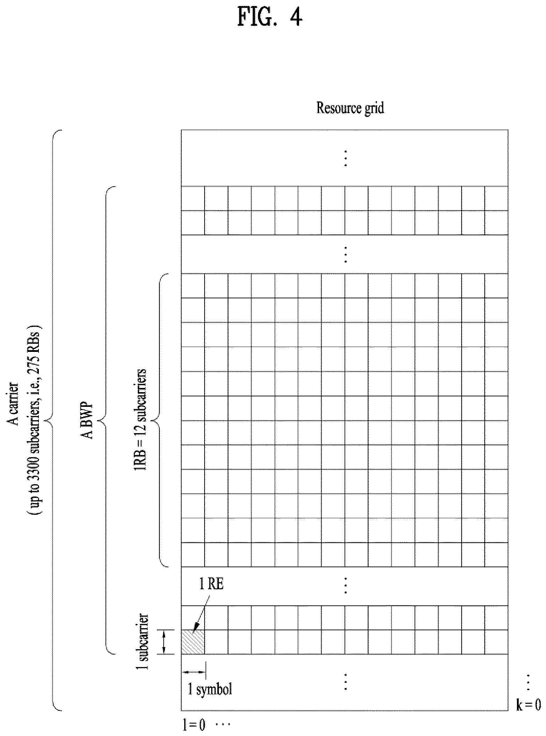

FIG. 4 illustrates the slot structure of a NR frame.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

## Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signalling, etc.). The BS may instruct the UE to switch to another configured DL/UL BWP (through L1 signaling, MAC CE or RRC signalling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

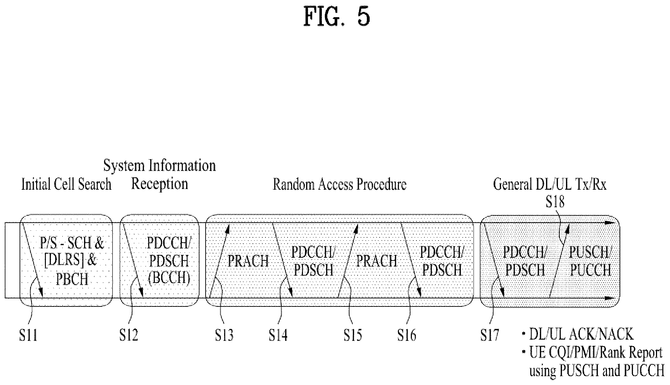

FIG. 5 is a diagram illustrating physical channels and a signal transmission method using the physical channels, which may be used in various embodiments.

Referring to FIG. 5, when powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

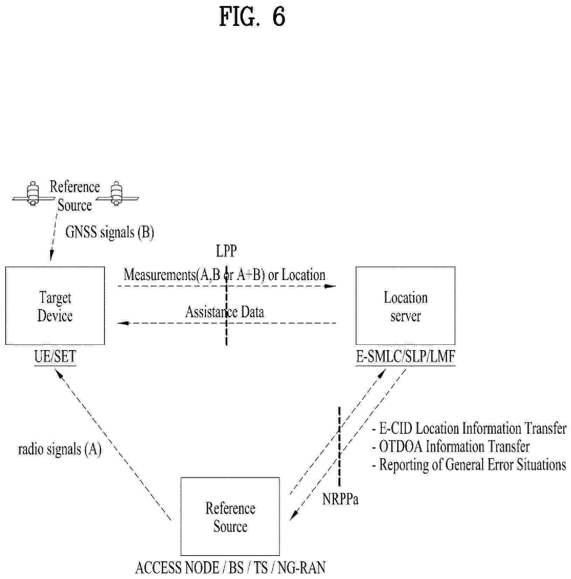

FIG. 6 is a diagram illustrating an exemplary positioning protocol configuration for positioning a UE, to which the embodiment is applicable.

Referring to FIG. 6, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

PRS (positioning reference signal)

For such positioning, a positioning reference signal (PRS) may be used. The PRS is a reference signal used to estimate the position of the UE.

A positioning frequency layer may include one or more PRS resource sets, each including one or more PRS resources.

Sequence generation

A PRS sequence $r(m)$ ($m = 0, 1, ...$) may be defined by Equation 1.

[Equation 1]

$$r(m) = \frac{1}{\sqrt{2}}\left(1 - 2c(m)\right) + j\frac{1}{\sqrt{2}}\left(1 - 2c(m+1)\right)$$

In Equation 1, c(i) may be a pseudo-random sequence. A pseudo-random sequence generator may be initialized by Equation 2.

[Equation 2]

$$c_{\text{init}} = \left( 2^{22} \left\lfloor \frac{n_{\text{ID,seq}}^{\text{PRS}}}{1024} \right\rfloor + 2^{10}\left(N_{\text{symb}}^{\text{slot}} n_{\text{s,f}}^{\mu} + l + 1\right)\left(2\left(n_{\text{ID,seq}}^{\text{PRS}} \bmod 1024\right) + 1\right) \right.$$

$$\left. + \left(n_{\text{ID,seq}}^{\text{PRS}} \bmod 1024\right) \right) \bmod 2^{31}$$

$n_{\text{s,f}}^{\mu}$ may be a slot number in a frame in an SCS configuration $\mu$. A DL PRS sequence

ID $n_{\text{ID,seq}}^{\text{PRS}} \in \{0, 1, ..., 4095\}$ may be given by a higher-layer parameter (e.g., DL-PRS-SequenceId). I may be an OFDM symbol in a slot to which the sequence is mapped.

Mapping to physical resources in a DL PRS resource

A PRS sequence $r(m)$ may be scaled by $\beta_{\text{PRS}}$ and mapped to REs $(k,l)_{p,\mu}$, specifically by Equation 3. $(k,l)_{p,\mu}$ may represent an RE $(k, l)$ for an antenna port p and the SCS configuration $\mu$.

$$[\text{Equation 3}]$$

$$a_{k,l}^{(p,\mu)} = \beta_{\text{PRS}}\, r(m)$$

$$m = 0, 1, \dots$$

$$k = mK_{\text{comb}}^{\text{PRS}} + \left( \left( k_{\text{offset}}^{\text{PRS}} + k' \right) \bmod K_{\text{comb}}^{\text{PRS}} \right)$$

$$l = l_{\text{start}}^{\text{PRS}}, l_{\text{start}}^{\text{PRS}} + 1, \dots, l_{\text{start}}^{\text{PRS}} + L_{\text{PRS}} - 1$$

Herein, the following conditions may have to be satisfied:

- The REs $(k, l)_{p,\mu}$ are included in an RB occupied by a DL PRS resource configured for the UE;
- The symbol I not used by any SS/PBCH block used by a serving cell for a DL PRS transmitted from the serving cell or indicated by a higher-layer parameter SSB-positionInBurst for a DL PRS transmitted from a non-serving cell;
- A slot number satisfies the following PRS resource set-related condition;

$l_{\text{start}}^{\text{PRS}}$ is the first symbol of the DL PRS in the slot, which may be given by a higher-layer parameter DL-PRS-ResourceSymbolOffset. The time-domain size of the DL PRS resource, $L_{\text{PRS}} \in \{2,4,6,12\}$ may be given by a higher-layer

$$K_{\text{comb}}^{\text{PRS}} \in \{2, 4, 6, 12\}$$

parameter DL-PRS-NumSymbols. A comb size $\phantom{xxx}$ may be given by a higher-layer parameter transmissionComb. A combination $\{L_{\text{PRS}}, K_{\text{comb}}^{\text{PRS}}\}$ of $L_{\text{PRS}}$ and $K_{\text{comb}}^{\text{PRS}}$ may be one of {2, 2}, {4, 2}, {6, 2}, {12, 2}, {4, 4},

$$k_{\text{offset}}^{\text{PRS}} \in \left\{ 0, 1, \dots, K_{\text{comb}}^{\text{PRS}} - 1 \right\}$$

{12, 4}, {6, 6}, {12, 6} and/or {12, 12}. An RE offset $\phantom{xxx}$ may be given by combOffset. A frequency offset $k'$ may be a function of $l - l_{\text{start}}^{\text{PRS}}$ as shown in Table 5.

[Table 5]

| $K_{\text{comb}}^{\text{PRS}}$ | Symbol number within the downlink PRS resource $l - l_{\text{start}}^{\text{PRS}}$ | | | | | | | | | | | |
|---|---|---|---|---|---|---|---|---|---|---|---|---|
| | **0** | **1** | **2** | **3** | **4** | **5** | **6** | **7** | **8** | **9** | **10** | **11** |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

A reference point for k=0 may be the position of point A in a positioning frequency layer in which the DL PRS resource is configured. Point A may be given by a higher-layer parameter dl-PRS-PointA-r16.

Mapping to slots in a DL PRS resource set

A DL PRS resource included in a DL PRS resource set may be transmitted in a slot and a frame which satisfy the following Equation 4.

[Equation 4]

$$\left(N_{\text{slot}}^{\text{frame},\mu} n_{\text{f}} + n_{\text{s,f}}^{\mu} - T_{\text{offset}}^{\text{PRS}} - T_{\text{offset,res}}^{\text{PRS}}\right) \bmod 2^{\mu} T_{\text{per}}^{\text{PRS}} \in \left\{i T_{\text{gap}}^{\text{PRS}}\right\}_{i=0}^{T_{\text{rep}}^{\text{PRS}}-1}$$

$N_{\text{slot}}^{\text{frame},\mu}$ may be the number of slots per frame in the SCS configuration μ. $n_{\text{f}}$ may be a system frame number (SFN).

$n_{\text{s,f}}^{\mu}$ may be a slot number in a frame in the SCS configuration μ. A slot offset $T_{\text{offset}}^{\text{PRS}} \in \left\{0, 1, \dots, T_{\text{per}}^{\text{PRS}} - 1\right\}$ may be given by a higher-layer parameter *DL-PRS-ResourceSetSlotOffset.* A DL PRS resource slot offset $T_{\text{offset,res}}^{\text{PRS}}$ may be given by a higher layer parameter *DL-PRS-ResourceSlotOffset.* A periodicity $T_{\text{per}}^{\text{PRS}} \in \{4, 5, 8, 10, 16, 20, 32, 40, 64, 80, 160, 320, 640, 1280, 2560, 5120, 10240\}$ may be given by a higher-layer parameter *DL-PRS-Periodicity.* A repetition factor $T_{\text{rep}}^{\text{PRS}} \in \{1, 2, 4, 6, 8, 16, 32\}$ may be given by a higher-layer parameter DL-PRS-ResourceRepetitionFactor. A muting repetition factor $T_{\text{muting}}^{\text{PRS}}$ may be given by a higher-layer parameter *DL-PRS-MutingBitRepetitionFactor.* A time gap $T_{\text{gap}}^{\text{PRS}} \in \{1, 2, 4, 8, 16, 32\}$ may be given by a higher-layer parameter *DL-PRS-ResourceTimeGap.*

The PRS reception procedure of a terminal in an NR system to which various embodiments of the present disclosure are applicable may be based on Table 6 below.

[Table 6]

| |
|---|
| 5.1.6.5 PRS reception procedure |
| The UE can be configured with one or more DL PRS resource set configuration(s) as indicated by the higher layer parameters DL-PRS-ResourceSet and DL-PRS-Resource. |
| Each DL PRS resource set consists of K≥1 DL PRS resource(s) where each has an associated spatial transmission filter. The UE can be configured with one or more DL PRS Positioning Frequency Layer configuration(s) as indicated by the higher layer parameter DL-PRS-PositioningFrequencyLayer. A DL PRS Positioning Frequency Layer is defined as a collection of DL PRS Resource Sets which have common parameters configured by DL-PRS-PositioningFrequencyLayer. |
| The UE assumes that the following parameters for each DL PRS resource(s) are configured via higher layer parameters DL-PRS-PositioningFrequencyLayer, DL-PRS-ResourceSet and DL-PRS-Resource. A positioning frequency layer consists of one or more PRS resource sets and it is defined by: |
| - DL-PRS-SubcarrierSpacing defines the subcarrier spacing for the DL PRS resource. All DL PRS Resources and DL PRS Resource sets in the same DL-PRS-PositioningFrequencyLayer have the same value of DL-PRS-SubcarrierSpacing. The supported values of DL-PRS-SubcarrierSpacing are given in Table 4.2-1 of [4, TS38.211]. |
| - DL-PRS-CyclicPrefix defines the cyclic prefix for the DL PRS resource. All DL PRS Resources and DL PRS Resource sets in the same DL-PRS-PositioningFrequencyLayer have the same value of DL-PRS-CyclicPrefix. The supported values of DL-PRS-CyclicPrefix are given in Table 4.2-1 of [4, TS38.211]. |
| - DL-PRS-PointA defines the absolute frequency of the reference resource block. Its lowest subcarrier is also known as Point A. All DL PRS resources belonging to the same DL PRS Resource Set have common Point A and all DL PRS Resources sets belonging to the same DL-PRS-PositioningFrequencyLayer have a common Point A. |
| The UE expects that it will be configured with [IDs] each of which is defined such that it is associated with multiple DL PRS Resource Sets from the same cell. The UE expects that one of these [IDs] along with a DL-PRS-ResourceSetId and a DL-PRS-ResourceId can be used to uniquely identify a DL PRS Resource. |

| |
|---|
| A PRS resource set consists of one or more PRS resources and it is defined by: |
| - DL-PRS-ResourceSetId defines the identity of the DL PRS resource set configuration. |

(continued)

- DL-PRS-Periodicity defines the DL PRS resource periodicity and takes values $T_{\text{per}}^{\text{PRS}} \in$ $2^{\mu}\{4, 8, 16, 32, 64, 5, 10, 20, 40, 80, 160, 320, 640, 1280, 2560, 5120, 10240, 20480\}$ slots, where $\mu = 0, 1, 2, 3$ for DL-PRS-SubcarrierSpacing=15, 30, 60 and 120kHz respectively. $T_{\text{per}}^{\text{PRS}} = 2^{\mu} \cdot 20480$ is not supported for $\mu = 0$. All the DL PRS resources within one resource set are configured with the same periodicity.

- DL-PRS-ResourceRepetitionFactor defines how many times each DL-PRS resource is repeated for a single instance of the DL-PRS resource set and takes values $T_{\text{rep}}^{\text{PRS}} \in$ $\{1,2,4,6,8,16,32\}$,. All the DL PRS resources within one resource set have the same ResourceRepetitionFactor

- DL-PRS-ResourceTimeGap defines the offset in number of slots between two repeated instances of a DL PRS resource with the same DL-PRS-ResourceID within a single instance of the DL PRS resource set and takes values $T_{\text{gap}}^{\text{PRS}} \in \{1,2,4,8,16,32\}$. The UE only expects to be configured with DL-PRS-ResourceTimeGap if DL-PRS-ResourceRepetitionFactor is configured with value greater than 1. The time duration spanned by one instance of a DL-PRS-ResourceSet is not expected to exceed the configured value of DL-PRS-Periodicity. All the DL PRS resources within one resource set have the same DL-PRS-ResourceTimeGap.

- DL-PRS-MutingPattern defines a bitmap of the time locations where the DL PRS resource is expected to not be transmitted for a DL PRS resource set. The bitmap size can be {2, 4, 8, 16, 32} bits long. The bitmap has two options for applicability. In the first option each bit in the bitmap corresponds to a configurable number of consecutive instances of a DL-PRS-ResourceSet where all the DL-PRS-Resources within the set are muted for the instance that is indicated to be muted. In the second option each bit in the bitmap corresponds to a single repetition index for each of the DL-PRS-Resources within each instance of a DL-PRS-ResourceSet and the length of the bitmap is equal to DL-PRS-ResourceRepetitionFactor. Both options may be configured at the same time in which case the logical AND operation is applied to the bit maps as described in clause 7.4.1.7.4 of [4, TS 38.211].

in a higher layer parameter DL-PRS-RstdReferenceInfo. The reference time indicated by the network to the UE can also be used by the UE to determine how to apply higher layer parameters DL-PRS-expectedRSTD and DL-PRS-expectedRSTD-uncertainty. The UE expects the reference time to be indicated whenever it is expected to receive the DL PRS. This reference time provided by DL-PRS-RstdReferenceInfo may include an [ID], a PRS resource set ID, and optionally a single PRS resource ID or a list of PRS resource IDs. The UE may use different DL PRS resources or a different DL PRS resource set to determine the reference time for the RSTD measurement as long as the condition that the DL PRS resources used belong to a single DL PRS resource set is met. If the UE chooses to use a different reference time than indicated by the network, then it is expected to report the DL PRS resource ID(s) or the DL PRS resource set ID used to determine the reference.

The UE may be configured to report quality metrics corresponding to the RSTD and UE Rx-Tx time difference measurements which include the following fields:

- TimingMeasQuality-Value which provides the best estimate of the uncertainty of the measurement
- TimingMeasQuality-Resolution which specifies the resolution levels used in the Value field

The UE expects to be configured with higher layer parameter DL-PRS-expectedRSTD, which defines the time difference with respect to the received DL subframe timing the UE is expected to receive DL PRS, and DL-PRS-expectedRSTD-uncertainty, which defines a search window around the expectedRSTD.

For DL UE positioning measurement reporting in higher layer parameters DL-PRS-RstdMeasurementInfo or DL-PRS-UE-Rx-Tx-MeasurementInfo the UE can be configured to report the DL PRS resource ID(s) or the DL PRS resource set ID(s) associated with the DL PRS resource(s) or the DL PRS resource set(s) which are used in determining the UE measurements DL RSTD, UE Tx-Rx time difference or the DL PRS-RSRP.

The UE can be configured in higher layer parameter UE Rx-Tx Time-MeasRequestInfo to report multiple UE Rx-Tx time difference measurements corresponding to a single configured SRS resource or resource set for positioning. Each measurement corresponds to a single received DL PRS resource or resource set which can be in difference positioning frequency layers.

For the DL RSTD, DL PRS-RSRP, and UE Rx-Tx time difference measurements the UE can report an associated higher layer parameter Timestamp. The Timestamp can include the SFN and the slot number for a subcarrier spacing. These values correspond to the reference which is provided by DL-PRS-RSTDReferenceInfo.

The UE is expected to measure the DL PRS resource outside the active DL BWP or with a numerology different from the numerology of the active DL BWP if the measurement is made during a configured measurement gap. When not configured with a measurement gap, the UE is only required to measure DL PRS within the active DL BWP and with the same numerology as the active DL BWP. If the UE is not provided with a measurement gap, the UE is not expected to process DL PRS resources on serving or non-serving cells on any symbols indicated as UL by the serving cell. When the UE is expected to measure the DL PRS resource outside the active DL BWP it may request a measurement gap in higher layer parameter [XYZ].

The UE assumes that for the serving cell the DL PRS is not mapped to any symbol that contains SS/PBCH. If the time frequency location of the SS/PBCH block transmissions from non-serving cells are provided to the UE then the UE also assumes that the DL PRS is not mapped to any symbol that contains the SS/PBCH block of the non-serving cell.

The UE may be configured to report, subject to UE capability, up to 4 DL RSTD measurements per pair of cells with each measurement between a different pair of DL PRS resources or DL PRS resource sets within the DL PRS configured for those cells. The up to 4 measurements being performed on the same pair of cells and all DL RSTD measurements in the same report use a single reference timing.

The UE may be configured to measure and report up to 8 DL PRS RSRP measurements on different DL PRS resources from the same cell. When the UE reports DL PRS RSRP measurements from one DL PRS resource set, the UE may indicate which DL PRS RSRP measurements have been performed using the same spatial domain filter for reception.

If the UE is configured with DL-PRS-QCL-Info and the QCL relation is between two DL PRS resources, then the UE assumes those DL PRS resources are from the same cell. If DL-PRS-QCL-Info is configured to the UE with 'QCL-Type-D' with a source DL-PRS-Resource then the DL-PRS-ResourceSetId and the DL-PRS-ResrouceId of the source DL-PRS-Resource are expected to be indicated to the UE.

The UE does not expect to process the DL PRS in the same symbol where other DL signals and channels are transmitted to the UE when there is no measurement gap configured to the UE.

UE Positioning Architecture

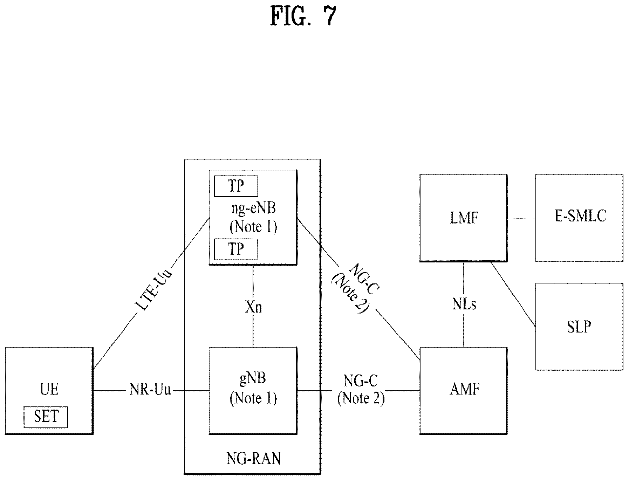

FIG. 7 illustrates an exemplary system architecture for measuring positioning of a UE to which the embodiment is applicable.

Referring to FIG. 7, an AMF may receive a request for a location service associated with a particular target UE from another entity such as a gateway mobile location center (GMLC) or the AMF itself decides to initiate the location service on behalf of the particular target UE. Then, the AMF transmits a request for a location service to a location management function (LMF). Upon receiving the request for the location service, the LMF may process the request for the location service and then returns the processing result including the estimated position of the UE to the AMF. In the case of a location service requested by an entity such as the GMLC other than the AMF, the AMF may transmit the processing result received from the LMF to this entity.

A new generation evolved-NB (ng-eNB) and a gNB are network elements of the NG-RAN capable of providing a measurement result for positioning. The ng-eNB and the gNB may measure radio signals for a target UE and transmits a measurement result value to the LMF. The ng-eNB may control several TPs, such as remote radio heads, or PRS-only TPs for support of a PRS-based beacon system for E-UTRA.

The LMF is connected to an enhanced serving mobile location center (E-SMLC) which may enable the LMF to access the E-UTRAN. For example, the E-SMLC may enable the LMF to support OTDOA, which is one of positioning methods of the E-UTRAN, using DL measurement obtained by a target UE through signals transmitted by eNBs and/or PRS-only TPs in the E-UTRAN.

The LMF may be connected to an SUPL location platform (SLP). The LMF may support and manage different location services for target UEs. The LMF may interact with a serving ng-eNB or a serving gNB for a target UE in order to obtain position measurement for the UE. For positioning of the target UE, the LMF may determine positioning methods, based on a location service (LCS) client type, required quality of service (QoS), UE positioning capabilities, gNB positioning capabilities, and ng-eNB positioning capabilities, and then apply these positioning methods to the serving gNB and/or serving ng-eNB. The LMF may determine additional information such as accuracy of the location estimate and velocity of the target UE. The SLP is a secure user plane location (SUPL) entity responsible for positioning over a user plane.

The UE may measure the position thereof using DL RSs transmitted by the NG-RAN and the E-UTRAN. The DL RSs transmitted by the NG-RAN and the E-UTRAN to the UE may include a SS/PBCH block, a CSI-RS, and/or a PRS. Which DL RS is used to measure the position of the UE may conform to configuration of LMF/E-SMLC/ng-eNB/E-UTRAN etc. The position of the UE may be measured by an RAT-independent scheme using different global navigation satellite systems (GNSSs), terrestrial beacon systems (TBSs), WLAN access points, Bluetooth beacons, and sensors (e.g., barometric sensors) installed in the UE. The UE may also contain LCS applications or access an LCS application through communication with a network accessed thereby or through another application contained therein. The LCS application may include measurement and calculation functions needed to determine the position of the UE. For example, the UE may contain an independent positioning function such as a global positioning system (GPS) and report the position thereof, independent of NG-RAN transmission. Such independently obtained positioning information may be used as assistance information of positioning information obtained from the network.

Operation for UE Positioning

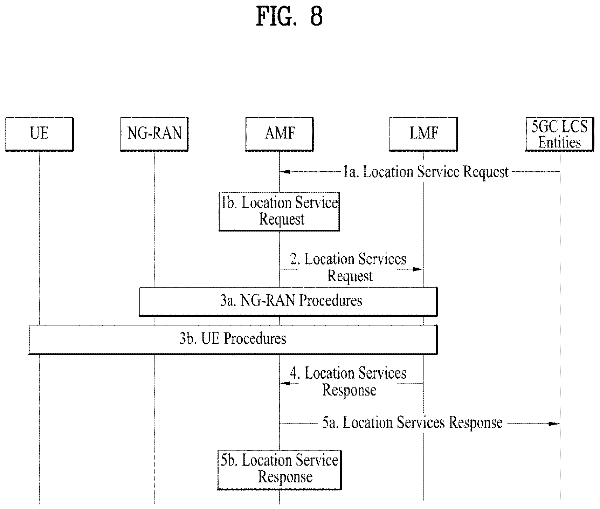

FIG. 8 illustrates an implementation example of a network for UE positioning.

When an AMF receives a request for a location service in the case in which the UE is in connection management (CM)-IDLE state, the AMF may make a request for a network triggered service in order to establish a signaling connection with the UE and to assign a specific serving gNB or ng-eNB. This operation procedure is omitted in FIG. 8. In other words, in FIG. 8 it may be assumed that the UE is in a connected mode. However, the signaling connection may be released by an NG-RAN as a result of signaling and data inactivity while a positioning procedure is still ongoing.

An operation procedure of the network for UE positioning will now be described in detail with reference to FIG. 8. In step 1a, a 5GC entity such as GMLC may transmit a request for a location service for measuring the position of a target UE to a serving AMF. Here, even when the GMLC does not make the request for the location service, the serving AMF may determine the need for the location service for measuring the position of the target UE according to step 1b. For example, the serving AMF may determine that itself will perform the location service in order to measure the position of the UE for an emergency call.

In step 2, the AMF transfers the request for the location service to an LMF. In step 3a, the LMF may initiate location procedures with a serving ng-eNB or a serving gNB to obtain location measurement data or location measurement assistance data. For example, the LMF may transmit a request for location related information associated with one or more UEs to the NG-RAN and indicate the type of necessary location information and associated QoS. Then, the NG-RAN may transfer the location related information to the LMF in response to the request. In this case, when a location determination method according to the request is an enhanced cell ID (E-CID) scheme, the NG-RAN may transfer additional location related information to the LMF in one or more NR positioning protocol A (NRPPa) messages. Here, the "location related information" may mean all values used for location calculation such as actual location estimate information and radio measurement or location measurement. Protocol used in step 3a may be an NRPPa protocol which will be described later.

Additionally, in step 3b, the LMF may initiate a location procedure for DL positioning together with the UE. For example, the LMF may transmit the location assistance data to the UE or obtain a location estimate or location measurement value. For example, in step 3b, a capability information transfer procedure may be performed. Specifically, the LMF may transmit a request for capability information to the UE and the UE may transmit the capability information to the LMF. Here, the capability information may include information about a positioning method supportable by the LFM or the UE, information about various aspects of a particular positioning method, such as various types of assistance data for an A-GNSS, and information about common features not specific to any one positioning method, such as ability to handle multiple LPP transactions. In some cases, the UE may provide the capability information to the LMF although the LMF does not transmit a request for the capability information.

As another example, in step 3b, a location assistance data transfer procedure may be performed. Specifically, the UE may transmit a request for the location assistance data to the LMF and indicate particular location assistance data needed to the LMF. Then, the LMF may transfer corresponding location assistance data to the UE and transfer additional assistance data to the UE in one or more additional LTE positioning protocol (LPP) messages. The location assistance data delivered from the LMF to the UE may be transmitted in a unicast manner. In some cases, the LMF may transfer the location assistance data and/or the additional assistance data to the UE without receiving a request for the assistance data from the UE.

As another example, in step 3b, a location information transfer procedure may be performed. Specifically, the LMF may send a request for the location (related) information associated with the UE to the UE and indicate the type of necessary location information and associated QoS. In response to the request, the UE may transfer the location related information to the LMF. Additionally, the UE may transfer additional location related information to the LMF in one or more LPP messages. Here, the "location related information" may mean all values used for location calculation such as actual location estimate information and radio measurement or location measurement. Typically, the location related information may be a reference signal time difference (RSTD) value measured by the UE based on DL RSs transmitted to the UE by a plurality of NG-RANs and/or E-UTRANs. Similarly to the above description, the UE may transfer the location related information to the LMF without receiving a request from the LMF.

The procedures implemented in step 3b may be performed independently but may be performed consecutively. Generally, although step 3b is performed in order of the capability information transfer procedure, the location assistance data transfer procedure, and the location information transfer procedure, step 3b is not limited to such order. In other words, step 3b is not required to occur in specific order in order to improve flexibility in positioning. For example, the UE may request the location assistance data at any time in order to perform a previous request for location measurement made by the LMF. The LMF may also request location information, such as a location measurement value or a location estimate value, at any time, in the case in which location information transmitted by the UE does not satisfy required QoS. Similarly, when the UE does not perform measurement for location estimation, the UE may transmit the capability information to the LMF at any time.

In step 3b, when information or requests exchanged between the LMF and the UE are erroneous, an error message may be transmitted and received and an abort message for aborting positioning may be transmitted and received.

Protocol used in step 3b may be an LPP protocol which will be described later.

Step 3b may be performed additionally after step 3a but may be performed instead of step 3a.

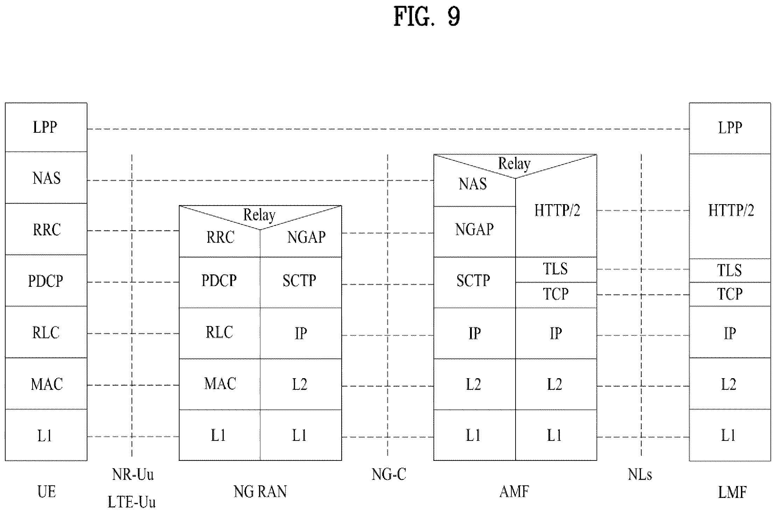

In step 4, the LMF may provide a location service response to the AMF. The location service response may include information as to whether UE positioning is successful and include a location estimate value of the UE. If the procedure of FIG. 8 has been initiated by step 1a, the AMF may transfer the location service response to a 5GC entity such as a GMLC. If the procedure of FIG. 9 has been initiated by step 1b, the AMF may use the location service response in order to provide a location service related to an emergency call.

Positioning Protocol

LTE Positioning Protocol (LPP)

FIG. 9 illustrates an exemplary protocol layer used to support LPP message transfer between an LMF and a UE. An LPP protocol data unit (PDU) may be carried in a NAS PDU between an AMF and the UE.

Referring to FIG. 9, LPP is terminated between a target device (e.g., a UE in a control plane or an SUPL enabled terminal (SET) in a user plane) and a location server (e.g., an LMF in the control plane or an SLP in the user plane). LPP messages may be carried as transparent PDUs cross intermediate network interfaces using appropriate protocols, such an NGAP over an NG-C interface and NAS/RRC over LTE-Uu and NR-Uu interfaces. LPP is intended to enable positioning for NR and LTE using various positioning methods.

For example, a target device and a location server may exchange, through LPP, capability information therebetween, assistance data for positioning, and/or location information. The target device and the location server may exchange error information and/or indicate abort of an LPP procedure, through an LPP message.

NR Positioning Protocol A (NRPPa)

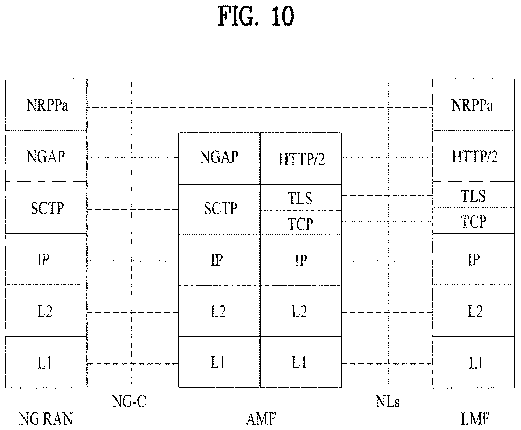

FIG. 10 illustrates an exemplary protocol layer used to support NRPPa PDU transfer between an LMF and an NG-RAN node.

NRPPa may be used to carry information between an NG-RAN node and an LMF. Specifically, NRPPa may carry an E-CID for measurement transferred from an ng-eNB to an LMF, data for support of an OTDOA positioning method, and a cell-ID and a cell position ID for support of an NR cell ID positioning method. An AMF may route NRPPa PDUs based on a routing ID of an involved LMF over an NG-C interface without information about related NRPPa transaction.

An NRPPa procedure for location and data collection may be divided into two types. The first type is a UE associated procedure for transfer of information about a particular UE (e.g., location measurement information) and the second type is a non-UE-associated procedure for transfer of information applicable to an NG-RAN node and associated TPs (e.g., gNB/ng-eNB/TP timing information). The two types may be supported independently or may be supported simultaneously.

Positioning Measurement Method

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference of Arrival)

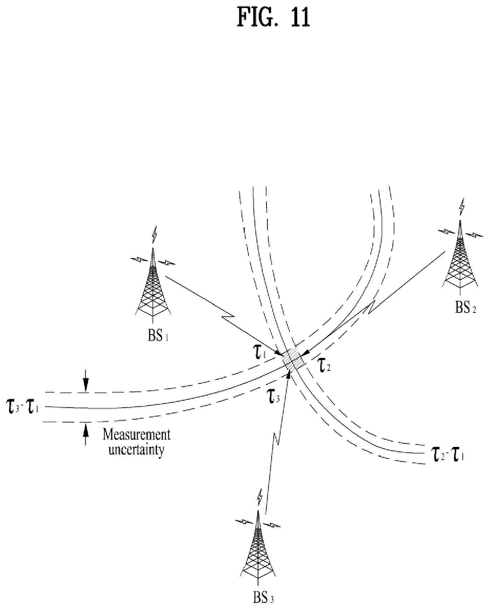

FIG. 11 is a diagram illustrating an observed time difference of arrival (OTDOA) positioning method, to which the embodiment is applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the

UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 5 below.

[Equation 5]

$$RSTDi_{,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 5, c is the speed of light, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_1)$ is a transmission time offset between two TPs, referred to as "real time differences" (RTDs), and $n_i$ and $ni$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io
- E-UTRAN measurement: ng-eNB Rx-Tx time difference, timing advance (TADV), and/or AoA

Here, TADV may be divided into Type 1 and Type 2 as follows.
$$T_{ADV} \text{ Type } 1 = (\text{ng-eNB Rx-Tx time difference}) + (\text{UE E-UTRA Rx-Tx time difference})$$

$$T_{ADV} \text{ Type } 2 = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

### CPM (Carrier Phase Measurement)

Carrier phase measurement (CPM) is one of the position estimation algorithms used in the GPS/GNSS. In brief, the CPM is a scheme of estimating the distance between a transmitter and receiver by measuring the phase of a received transmission signal and determining the position based on the estimated distance. In other words, the position of the user may be measured by calculating the distance to each of the multiple satellites based on signals received from the multiple satellites. In this case, it is assumed that there is a Line of Sight (LoS) between the satellite and the user, and based on this assumption, the time difference between the transmitter and receiver may be translated into the distance between the transmitter and receiver. Meanwhile, satellite channels may experience multi-path and delays due to the ionosphere, but the multi-path and delays caused by the ionosphere may be mitigated through modeling.

Table 7 below shows the matters discussed in relation to (3GPP) CPM in a specific scenario.

[Table 7]

| Justification |
|---|
| Regarding higher accuracy, two promising techniques identified in earlier studies will be considered in Rel-18: one is to take the advantage of the rich 5G spectrum to increase the bandwidth for the transmission and reception of the positioning reference signals based on PRS/SRS bandwidth aggregation for intra-band carriers, and the other is to use the NR carrier phase measurements. GNSS carrier phase positioning has been used very successfully for centimetre-level positioning but is limited to outdoor applications. NR carrier phase positioning has the potential for significant performance improvements for indoor and outdoor deployments in comparison with the existing NR positioning methods, as well as shorter latency and lower UE power consumption in comparison with RTK-GNSS outdoors. |

| Objective |
|---|
| • Improved accuracy, integrity, and power efficiency: <br> ◦ Study solutions for Integrity for RAT dependent positioning techniques [RAN2, RAN1]: <br>   ▪ Identify the error sources, [RAN1, RAN2]. <br>   ▪ Study methodologies, procedures, signalling, etc for determination of positioning integrity for both UE-based and UE-assisted positioning [RAN2] <br>   ▪ Focus on reuse of concepts and principles being developed for RAT-Independent GNSS positioning integrity, where possible. <br> ◦ Study solutions for accuracy improvement based on PRS/SRS bandwidth aggregation for intra-band carriers considering e.g. timing errors, phase coherency, frequency errors, power imbalance, etc [RAN4]: <br> ◦ Study solutions for accuracy improvement based on NR carrier phase measurements [RAN1, RAN4] <br>   ▪ Reference signals, physical layer measurements, physical layer procedures to enable positioning based on NR carrier phase measurements for both UE-based and UE-assisted positioning [RAN1] <br>   ▪ Focus on reuse of existing PRS and SRS, with new reference signals only considered if found necessary |

(continued)

| Objective |
|---|
| ◦ Study the requirements on LPHAP as developed by SA1 and evaluate whether existing RAN functionality can support these power consumption and positioning requirements. Based on the evaluation, and, if found beneficial, study potential enhancements to help address any limitations [RAN2, RAN1]<br>  ▪ Study is limited to a single representati LPHAP<br>  ▪ ve use case (use case 6 as defined TS 22.104). The choice of selected use case can be reviewed at the start of the study.<br>Study is limited to enhancements to RRC_INACTIVE and/or RRC_IDLE state |

The aforementioned CPM may be compared to code phase measurement. While the code phase measurement is commonly used, in GPS/GNSS-related positioning, the actual phase of a carrier may be directly measured. Typically, the CPM provides higher accuracy than the code phase measurement because the CPM directly measures the phase within a cycle corresponding to the carrier frequency. Meanwhile, the CPM and code phase measurement may be performed based on similar or identical algorithms or methods.

In the CPM, the following fundamental positioning principle may be used: the transmitter transmits a predetermined signal at a specific time, and the receiver measures the exact reception time at the carrier phase level (i.e., within the cycle of the carrier frequency). In this case, the distance between the transmitter and receiver may be measured very accurately based on the CPM. To use such a method, the distance is typically converted into a phase, and a pseudo-range equation may be derived based on the conversion. As CPM positioning based on the pseudo-range equation, positioning based on GNSS/GPS may be performed by applying Equation 6 below.

[Equation 6]

$$ \mathrm{p} = \rho + d_p + c(dt - dT) + d_{ion} + d_{trop} + e_{mp} + e_p $$

In Equation 6, p denotes pseudo-range measurement, $\rho$ denotes the true range, $d_p$ denotes satellite orbital errors, c denotes the speed of light, $dt$ denotes the satellite clock offset from GPS time, $dT$ denotes the receiver clock offset from GPS time, $d_{ion}$ denotes the ionospheric delay, $d_{trop}$ denotes the tropospheric delay, $e_{mp}$ denotes the multi-path effect, and $e_p$ denotes the receiver noise.

These terms may be considered in the GPS/GNSS, and there are techniques to mitigate or remove each term. Additionally, although it is not explicitly represented in Equation 6, the carrier phase information that the user may estimate is within a range of $[0, 2\pi]$. For distances exceeding the range, a separate estimation method is needed. In other words, when the actual distance between the user and the satellite is converted into a phase, the receiver needs to estimate the distance corresponding to an integer multiple of the frequency cycle through a separate estimation method (integer ambiguity resolution).

**Differencing**

Positioning using CPM in the GNSS/GPS may also consider the following factors. Specifically, a cycle slip may occur at the receiver, which may require reporting or correction therefor. The cycle slip may occur when the receiver is incapable of tracking a signal beyond a specific threshold (e.g., a half-cycle). When such a cycle slip occurs, the measurement of the corresponding epoch from the transmitter may become invalid. After the cycle slip, measurements may be reused, but the integer ambiguity needs to be re-estimated.

Additionally, the issue of position dilution (dilution of precision) may also arise. The position dilution means that even when positioning is performed based on the same number of transmitters and receivers and with the same signal-to-noise ratio (SNR), the accuracy of the positioning may vary depending on the relative positions (or distances) between the transmitter and receiver, which is often referred to as geometric dilution of precision (GDOP). For example, when a receiver calculates the position based on signals from N transmitters, the positioning accuracy of the receiver may be lower if the transmitters are closely grouped, compared to when the transmitters are more evenly distributed.

**Integer Ambiguity Resolution**

First, the following may be considered as solutions related to integer ambiguity resolution (refer to Lee, Hongkyu (2014). "An Instantaneous Integer Ambiguity Resolution for GPS Real-Time Structure Monitoring," Journal of Korean Society of Civil Engineers, Vol. 34, No. 1, pp. 342-353 (in Korean)).

In dynamic positioning using GPS carriers, centimeter-level accuracy may be achieved through precise determination of unknown integer ambiguity contained in observation data. To this end, ambiguity resolution, which is a mathematical procedure for converting ambiguous range observation data with uncertainty into a precise range with millimeter-level accuracy, is necessary. For GPS dynamic positioning, it is common to apply the integer-constrained least squares (Teunissen, 1994; Han et al., 1997; Verhagen, 2004).

However, when the receiver is moving, there is a limitation on observation data capable of being used in the mathematical model compared to when the receiver is stationary, resulting in lower estimation precision and higher correlation, which makes it difficult to quickly and accurately resolve the integer ambiguity (Teunissen, 1993; Lee et al., 2005). Therefore, in GPS dynamic positioning, it is common to use the on-the-fly (OTF) method, which extracts and accumulates only the integer ambiguity part of a normal equation. The time required for initializing the integer ambiguity may range from several seconds to several minutes, depending on the satellite geometry and residual errors (Hofmann-Wellenhof et al., 2001). This method depends on the previously determined integer ambiguity after initialization as long as there are no signal interruptions (cycle slips). In this method, when initialization is required, it is not possible to perform high-precision positioning during the initialization period. Additionally, recalculation of the integer ambiguity is required due to changes in the satellite geometry, and continuous monitoring for signal interruptions is necessary, which makes the algorithm inherently complex.

In the mid-1990s, with the emergence of dual-frequency receivers capable of observing a precise pseudo-range, instantaneous ambiguity resolution has been developed for baselines of around 10 km (Han et al., 1996). This method independently resolves the integer ambiguity for each epoch whenever the GPS receiver acquires both the carrier phase and precise pseudo-range. Since the method does not require additional algorithms for checking the signal interruption or satellite geometry, the method is suitable for GPS structural monitoring environments where such interruptions frequently occur due to the structure or passing vehicles. However, the performance of the instantaneous ambiguity resolution is significantly affected by the satellite geometry and residual errors. Particularly, when fewer than five satellites are observed or when multi-path effects become significant, the performance thereof degrades (Lee et al., 2004).

There are a variety of algorithms for performing integer ambiguity resolution, and one of the most well-known and effective methods is least squares ambiguity decorrelation adjustment (LAMBDA). To use the LAMBDA, the float estimate of the position, i.e., the positioning within the cycle should be separated from the integer ambiguity. Since the integer ambiguity is an integer rather than a floating point value, the obtained float solution is not the exact solution and may be further refined. The ellipsoid formed by the covariance of the integer ambiguity becomes extremely elongated in one direction, and as a result, searching within this space is inefficient. Therefore, the LAMBDA transforms the system with the elongated ellipsoid to a system closer to a sphere, which is more efficient than previous methods in searching for solutions to the integer ambiguity.

Another method for estimating integer ambiguity involves using both CPM and code phase measurement at each epoch. The downside of this method is that a time slew value is required to obtain the correlation between the CPM and code phase measurement, and GPS outputs at 1 Hz from the Novatel Superstar II. A brief summary thereof is that the measurement for a single epoch and the covariance of the integer ambiguity from the previous epoch are used. The reason for using the covariance from the previous epoch is that when the receiver maintains phase lock on the carrier phase, the integer ambiguity remains constant across the two epochs. In addition, there are other algorithms for estimating integer ambiguity such as algorithms based on the extended Kalman filter, and there are many variations.

## CPM in NR

The aforementioned CPM in the GPS/GNSS may be based on a single carrier. Specifically, in the CPM, the phase may be estimated based on the transmission and reception of sinusoidal signals, rather than in the code domain. The CPM between a satellite and user in the GPS/GNSS may be introduced to the gNB (or TRP) and UE in NR. In the introduction thereof to NR, there may be the following differences. Unless the sinusoidal signal is redefined as a reference signal, OFDM-based CPM should be performed. In other words, the OFDM-based CPM differs from GPS/GNSS-based CPM in that the OFDM-based CPM is performed on relatively wideband signals.

First, the current reference signal for positioning in NR is a PRS. If a sinusoidal signal is redefined based on the PRS, the sinusoidal signal may have the configuration characteristics of the PRS. That is, the bandwidth (BW) configuration for the sinusoidal signal may be more flexible. Additionally, the probability of having a LoS path between the BS (or TRP) and the user may be lower than the probability of having a LoS path between the satellite and the user. In other words, since the multi-path effects between the BS (or TRP) and the user are incapable of being ignored, the CPM in NR should also consider the effects of multi-path between the BS (or TRP) and the user. In the CPM in NR, non-line of sight (NLOS) elimination or LOS path estimation may be treated with greater importance from the perspective of algorithms. Additionally, compared to the GPS, NR typically has higher carrier frequencies, larger BWs, and stricter latency requirements. Consequently, in the CPM in NR, the time required to resolve integer ambiguity needs to be further reduced.

Solutions may be needed to address issues related to user positioning based on the CPM using the PRS in NR. Since the PRS is a reference signal with a BW, there should be a common understanding between the higher layers and the UE regarding which frequency within a given PRS is used for phase measurement. In contrast, existing NR positioning methods (e.g., OTDOA, AoA, AoD, etc.) do not require specifying or indicating specific frequency resources. However, in CPM-based positioning using the PRS, an additional operation of specifying or reporting a specific frequency may be required.

Hereinafter, a method of configuring frequency resources for estimating and reporting the phase of a carrier between a UE and a server and indicating and signaling CPM based on the configuration of the frequency resources will be described

## CPM Positioning Method Using PRS

In CPM-based positioning, it may be necessary to define a method of representing the distance measured based on the carrier phase. For example, if the frequency for deriving a distance from the phase or phase information is preconfigured, the UE may report the phase information measured for the frequency to the BS without reporting information on the frequency. Alternatively, a pseudo-range equation, which calculates the distance using the cycle of the carrier frequency and the measured phase, may be reported or signaled. However, if the frequency for deriving the distance based on the phase information is not preconfigured, the UE needs to report or indicate information on the frequency (RE) on which the phase is measured in signaling for measurement reporting or differencing.

Therefore, a method of representing a frequency for CPM will be described in Section 1. In Section 2, a method of indicating a frequency for CPM will be described. In other words, Section 1 describes the method for representing the frequency for CPM used to calculate the distance between the gNB and the user or between users, while Section 2 addresses the method for indicating and/or reporting the reference frequency for CPM used to calculate the distance between the gNB and the user or between users.

## 1. Method of Representing Measurement Frequency for CPM

Before explaining a measurement frequency used to calculate the distance between the gNB and the user, it is necessary to first discuss a method of representing the measurement frequency. In the method for representing the measurement frequency, a reference frequency is typically combined with an offset value. For example, when representing a measurement frequency f1, it may be indicated directly as f1, but it is more common to represent the measurement frequency based on the relationship of f1 = fo + f_offset (where fo is the reference frequency and f_offset is the difference between the reference frequency and the measurement frequency). In this case, the measurement frequency is usually represented by the corresponding value of f_offset. Therefore, it is necessary to predefine a method for representing the reference measurement frequency (f0) related to the measurement frequency f1, as well as a method for representing the frequency offset (f_offset).

For the sake of convenience in the following explanation, the frequency for CPM, the reference frequency, and the frequency offset will be defined and referred to as a measurement frequency, a reference measurement frequency, and a measurement frequency offset, respectively.

### (1) **Method of Representing Reference Measurement Frequency**

A specific reference frequency refers to a pre-agreed or predefined reference or reference frequency used to represent the measurement frequency between the gNB (or location server) and the UE when performing positioning using CPM. In other words, if the measurement frequency f1 is to be expressed using the relationship of f1 = fo + f_offset, the reference measurement frequency may be fo except for f_offset. In addition, at least one of the following options may be considered for the reference measurement frequency.

### - Option 1: Indication method by reusing existing resource reference frequency

The reference measurement frequency for CPM-based positioning may reuse the resource reference frequency that is previously used for common understanding between the UE and the gNB (or location server) (the resource reference frequency may be the reference previously used to indicate frequency resources to the UE or the reference frequency related to operations of the UE or gNB). Such an existing resource reference frequency may be defined by the indication from the gNB (or location server) or by the report from the UE. In this way, the reference measurement frequency may also be defined by the indication from the gNB or the report from the UE. To reduce signaling overhead, the reference measurement frequency may be common for both DL CPM and UL CPM. Alternatively, for a flexible configuration, a reference measurement frequency for UL CPM may be reported by the UE, while a reference measurement frequency for DL CPM may be indicated by the gNB (or location server).

For example, the reference measurement frequency indicated by the gNB (or location server) may correspond to point A, which is used as the resource reference frequency. In other words, the reference measurement frequency for CPM may be a value configured at a frequency layer during a PRS configuration. In this case, the reference measurement frequency may be defined as a value corresponding to point A, which is included in DL-PRS assistance data, the resource reference frequency specified by the location server for DL-PRS processing (see Table 8 below). As shown in Table 8, point A may be defined based on an absolute radio frequency channel number (ARFCN) value or a PRB (PRB index) indicated by an IE *dl-PRS-StartPRB-r16*.

[Table 8]

```
NR-DL-PRS-PositioningFrequencyLayer-r16 ::= SEQUENCE {
        dl-PRS-SubcarrierSpacing-r16      ENUMERATED {kHz15, kHz30, kHz60, kHz120, ...},
        dl-PRS-ResourceBandwidth-r16     INTEGER (1..63),
        dl-PRS-StartPRB-r16                         INTEGER (0..2176),
        dl-PRS-PointA-r16                             ARFCN-ValueNR-r15,
        dl-PRS-CombSizeN-r16                    ENUMERATED {n2, n4, n6, n12, ...},
        dl-PRS-CyclicPrefix-r16                    ENUMERATED {normal, extended, ...},
        ...
}
```

| *NR-DL-PRS-AssistanceData* field descriptions |
|---|
| **nr-DL-PRS-ReferenceInfo**<br>This field specifies the IDs of the assistance data reference TRP. |
| **nr-DL-PRS-AssistanceDataList**<br>This field specifies the DL-PRS resources for each frequency layer. |
| **nr-SSB-Config**<br>This field specifies the SSB configuration of the TRPs. |
| **nr-DL-PRS-PositioningFrequencyLayer**<br>This field specifies the Positioning Frequency Layer for the *nr-DL-PRS-AssistanceDataPerFreq* field. |

Alternatively, the reference measurement frequency for CPM indicated/configured by the gNB (or location server) may correspond to a direct current (DC) subcarrier on DL or UL, which is a previously indicated resource reference frequency (see Table 9 from Clause 4.4.2 of 3GPP TS 38.211).

[Table 9]

| |
|---|
| For the downlink, the higher-layer parameter *txDirectCurrentLocation* in the *SCS-SpecificCarrier* IE indicates the location of the transmitter DC subcarrier in the downlink for each of the numerologies configured in the downlink. Values in the range 0 - 3299 represent the number of the DC subcarrier and the value 3300 indicates that the DC subcarrier is located outside the resource grid. |
| For the uplink, the higher-layer parameter *txDirectCurrentLocation* in the *UplinkTxDirectCurrentBWP* IE indicates the location of the transmitter DC subcarrier in the uplink for each of the configured bandwidth parts, including whether the DC subcarrier location is offset by 7.5 kHz relative to the center of the indicated subcarrier or not. Values in the range 0 - 3299 represent the number of the DC subcarrier, the value 3300 indicates that the DC subcarrier is located outside the resource grid, and the value 3301 indicates that the position of the DC subcarrier in the uplink is undetermined. |

In other words, the reference measurement frequency for at least one of DL and UL CPM may correspond to the frequency position of a DC subcarrier defined by *txDirectCurrentLocation* of *SCS-SpecificCarrier,* which is indicated by the gNB to the UE via higher layers, or to the frequency position of a DC subcarrier of a PRS corresponding to the frequency position of the DC subcarrier. Additionally (or alternatively), the reference measurement frequency for at least one of DL and UL CPM may correspond to the frequency position of a DC subcarrier defined by *txDirectCurrentLocation* of *UplinkTxDirectCurrentBWP,* which is indicated by the gNB to the UE via higher layers, or to the frequency position of a DC subcarrier of an SRS corresponding thereto.

Alternatively, as the reference frequency reported by the UE, the reference measurement frequency for at least one of DL and UL CPM may correspond to the position of a DC subcarrier at the Tx side of the UE. Similarly to *txDirectCurrentLocation* described above, when the position of the DC subcarrier at the Tx side of the UE is reported, the reference measurement frequency for at least one of DL and UL CPM may correspond to the reported position of the DC subcarrier.

- Option 2: Position of measurement frequency by configuration.

In Option 1 described above, the reference measurement frequency is explicitly indicated or reported. However, in Option 2, the reference measurement frequency may be considered as predefined or agreed upon without explicit reporting or indication. For example, the reference measurement frequency may be predefined or agreed upon as a specific RB or RE within a bandwidth (BW) where a reference signal for positioning (e.g., PRS, SRS) is indicated. For instance, when a PRS is configured, the PRS may be indicated for the frequency layer by *NR-DL-PRS-Positioning-FrequencyLayer-r16*. In this case, parameters indicated by configuration information for the PRS may include a subcarrier spacing (SCS), resource bandwidth, start PRB, point A, comb size, cyclic prefix, etc. Among these parameters, a frequency dependent on the SCS and/or resource bandwidth may serve as the reference measurement frequency for CPM. For example, the reference measurement frequency may be predefined to be based on an RE, which is the center of the resource bandwidth, or the reference measurement frequency may be predefined to correspond to the frequency of an RE with the highest index or the lowest index among REs related to the resource bandwidth.

Hereinafter, a method for representing a measurement frequency offset, which is the frequency offset related to the measurement frequency, will be described in detail.

## (2) Method of representing frequency corresponding to measurement frequency offset

The measurement frequency offset refers to an offset used to represent the measurement frequency, which is understood or shared between the gNB (or location server) and the UE when performing CPM-based positioning. In other words, when expressing the measurement frequency f1 using the relationship of f1 = fo + f_offset, f_offset corresponds to the measurement frequency offset. At least one of the following options may be considered as a method by which the gNB (or location server) or the UE indicates/reports the measurement frequency offset related to the aforementioned reference measurement frequency. Meanwhile, if the frequency offset is not indicated/configured, the aforementioned reference measurement frequency may be considered to be configured/indicated as the measurement frequency for CPM. In other words, when it is expected that the gNB (or location server) will indicate the measurement frequency offset (and/or reference measurement frequency) to the UE but there is no indication/configuration for the measurement frequency offset, the UE may understand/assume that the reference measurement frequency is the measurement frequency for CPM. Alternatively, when it is expected that the UE will report the reference measurement frequency and measurement frequency offset to the gNB (or location server) but the gNB (or location server) does not receive the report of the measurement frequency offset, the gNB (or location server) may assume/understand that the reported reference measurement frequency is the measurement frequency for CPM.

- Option 1: Indication based on existing frequency domain grid

The existing frequency domain grid used in the frequency domain may be reused for the expression/indication of the measurement frequency offset. For example, the measurement frequency offset may be indicated/configured/reported based on the frequency offset used in the synchronization raster (i.e., ARFCN or GSCN (global synchronization channel number)). In other words, when the measurement frequency f1 is indicated by the gNB (or location server) according to the aforementioned method (or predefined agreement), the measurement frequency offset (and/or the measurement frequency) may be indicated in the form of N bits based on the ARFCN (or GSCN). In other words, the measurement frequency offset may be indicated/configured by reusing the predefined existing frequency offset representation method for each band with intervals of 100 kHz or 15 kHz. For example, the measurement frequency offset may be represented as a frequency offset of N bits or in units of M bits. Alternatively, since the transmission/reception channel or signal of the UE is always indicated along with the SCS, the measurement frequency offset may use the indicated SCS as the unit or base unit. That is, the measurement frequency offset may be indicated with an RB or RE (related to the signal/channel) as the reference or base unit.

- Option 2: Direct indication of actual frequency offset

Even if the phase measured based on CPM is the same, the distance corresponding to the measured phase may vary depending on the frequency on which phase measurement is performed. Therefore, the measurement frequency offset for representing the measurement frequency needs to be specified/indicated with considerable precision. In other words, the reference measurement frequency and/or measurement frequency offset for indicating/representing the measurement frequency needs to be expressed with high accuracy. To this end, the measurement frequency offset may be directly specified/configured in Hz (or kHz) units. Alternatively, excluding the reference measurement frequency, the actual frequency on which CPM is to be performed or is being performed may be specified in Hz (or kHz) units. In other words, the method for indicating/configuring the reference measurement frequency may be used as it is, but the measurement frequency offset may be indicated in Hz or kHz units.

Unlike the aforementioned indication/configuration of the measurement frequency, the measurement frequency may be predefined for each frequency band by a prior agreement. If the measurement frequency is based on the prior agreement, the gNB (or location server)/UE may assume/understand that CPM will be performed based on the predefined measurement frequency for a specific frequency band, with no indication/reporting. Alternatively, if the indication/reporting of the measurement frequency is not performed (contrary to what is expected to be indicated/reported by the gNB/UE as described in Section 2), the measurement frequency on which CPM is to be performed may be predefined for each (specific) frequency band by the prior agreement, and the UE and/or gNB may perform CPM based on the pre-agreed/predefined measurement frequency or expect CPM to be performed based on the measurement frequency. In other words, if there is no explicit/implicit indication/reporting of the measurement frequency, the UE may perform and report measurement for CPM based on the predefined default measurement frequency/frequencies.

Hereinafter, a method by which the gNB configures/indicates the measurement frequency for CPM to the UE (and/or a method by which the UE reports the measurement frequency for CPM to the gNB) based on the aforementioned method of representing the measurement frequency will be described in detail.

## 2. Configuration/Indication/Reporting of Measurement Frequency

The above-described method for indicating/configuring/reporting the measurement frequency for CPM may be divided into the following two scenarios. Scenario 1 may relate to a method by which the gNB indicates/configures the measurement frequency, and Scenario 2 may relate to a method by which the UE reports the measurement frequency.

The measurement frequency (frequency for CPM) reported/indicated according to the method described below may be reported/indicated at the start of the measurement for CPM (or before the measurement). In this case, the gNB (or location server) and UE may consider the time during which the location estimation using CPM is performed as valid. Here, the time during which the location estimation based on the indicated/reported measurement frequency is valid may refer to all time durations during which CPM and CPM reporting are repeatedly performed on a frequency configured for a PRS (or SRS, etc.) configured for CPM (or for all reference signals corresponding to the same frequency layer). Alternatively, the indicated/configured measurement frequency may simply be considered to be valid for CPM-based measurement until a new measurement frequency is reported/indicated/configured (after the report/indication/configuration of the measurement frequency).

Alternatively, the gNB (or location server) may establish a valid time window for the measurement frequency that is reported/indicated/configured according to the method described below. The valid time window may be a time duration from the point when the measurement frequency is reported/indicated/configured until the measurement frequency is reported. However, the valid time window may be (bounded and) configured based on factors such as changes in channel characteristics and UE mobility (or factors related to the UE capability, such as the time duration that ensures the continuity of the UE measurement). A single measurement frequency may be used during the valid time window, and after the expiration of the valid time window, a new measurement frequency may be indicated to the UE or reported by the UE. Meanwhile, the PRS configuration related to the execution of CPM may be applied to PRS resources and/or PRS resource sets that fall outside the valid time window configured for CPM. In this case, the UE performs CPM-based positioning for the PRS resources/PRS resource sets within the valid time window. For the PRS resources/PRS resource sets that fall outside the valid time window, the UE may perform measurement and reporting according to other positioning techniques (e.g., OTDOA, AOA, AOD, etc.).

Alternatively, for the clarity of the measurement operations of the UE, an additional measurement gap related to the measurement frequency may be specified/configured. In other words, if the reception time of a signal in an active DL BWP overlaps with the carrier phase measurement time, a separate measurement gap needs to be configured to ensure the clarity of the measurement operations of the UE. For example, if the reception time and the measurement time overlap and if the center frequency and/or SCS differ between the signal reception in the active DL BWP and the CPM measurement, the measurement gap needs to be additionally configured (for example, to allow for changes in the center frequency and/or SCS). Therefore, if the center frequency corresponding to the active DL BWP (or receiving the active DL BWP) differs from the measurement frequency indicated/specified for carrier phase measurement, or if the SCS differs between the PRS for measuring the active DL BWP and the PRS for carrier phase measurement, the UE may expect that a measurement gap will be configured for the PRS related to carrier phase measurement, or the measurement gap may be configured.

Even when the signal reception time in the active DL BWP overlaps with the carrier phase measurement time, if the center frequency and SCS are the same between the signal reception in the active DL BWP and the CPM measurement, the UE may ensure clarity in the measurement operation without any measurement gap.

The measurement frequency described above may be determined according to the method described below. In the existing reporting method, distinguishing between different frequency layers may be impossible. To overcome this issue, when the UE performs measurement reporting for CPM, the UE may indicate the measurement frequency for CPM along with a LOS indicator, RSRP, etc., thereby distinguishing CPM from other positioning techniques. Alternatively, the UE may report to the gNB (or location server) that the measurement is based on CPM through a separate indicator.

(1) Scenario 1

The gNB (or location server) may specify/indicate/configure a single measurement frequency or multiple measurement frequencies to the UE for CPM. To this end, Option 1 and/or Option 2 below may be considered.

- Option 1: Indication of single measurement frequency for CPM

If the gNB (or location server) specifies/configures a single measurement frequency to the UE for CPM, the gNB (or location server) may also indicate/configure the configuration of a reference signal along with the indication/configuration of the measurement frequency. In the case of DL CPM in NR, since the CPM is expected to be performed based on a PRS, the configuration of the reference signal and/or the (single) measurement frequency may be specified/configured in the frequency layer for the PRS. Since PRS resource sets in the current frequency layer and PRS resources corresponding to each PRS resource set all share the same BW, point A, and/or SCS, the gNB (or location server) may specify/configure the (single) measurement frequency (and/or the configuration of the reference signal) in the frequency layer (or PRS resource set or PRS resource) according to the methods described in Section 1 (e.g., a frequency offset from point A, a specific point in a configured BW, etc.). In such methods, if a group of UEs is configured with a PRS on the same frequency layer, the UE group may have a common measurement frequency for CPM, which may provide advantages in signaling for differencing.

Alternatively, the single measurement frequency may be specified during the 'Assistance Data Transfer' procedure for NR positioning. For example, the gNB (or location server) may transmit 'assistance data transfer' to a UE capable of performing CPM to indicate a configuration for CPM. In this case, the gNB (or location server) may explicitly specify/indicate the measurement frequency for CPM, separate from the PRS configuration, through the 'Assistance Data Transfer' by assigning the reference measurement frequency and measurement frequency offset to the UE (for example, according to the methods described in Section 1).

- Option 2: Indication of multiple measurement frequencies for CPM

The indication of a single frequency for CPM, as described in Option 1, may be efficient in terms of signaling. However, it may impose a restriction on the UE because the UE needs to always measure the phase based only on the specified measurement frequency. Considering the UE capability or the channel environment, such a restriction may not be appropriate. Therefore, the gNB (or location server) may indicate/configure multiple measurement frequencies to the UE, and the UE may select one of the provided measurement frequencies based on the UE capability or the channel environment and then perform CPM on the selected measurement frequency. In this case, as described in Option 1, the configuration of reference signals related to CPM for the multiple measurement frequencies may also be indicated together. Alternatively, the gNB (or location server) may indicate/specify the reference measurement frequency and/or measurement frequency offset for multiple measurement frequencies, separate from the PRS configuration, by transmitting the 'assistance data transfer' to the UE capable of performing CPM, thereby indicating separate configurations for CPM.

Alternatively, the gNB (or location server) may implicitly indicate multiple measurement frequencies by indicating one measurement frequency. For example, the gNB (or location server) may indicate one measurement frequency to the UE, and the UE may assume that other measurement frequencies that have an integer multiple relationship with the indicated frequency are also implicitly indicated as multiple measurement frequencies for CPM.

As described above, when the gNB (or location server) specifies multiple measurement frequencies to the UE, the UE may report on one of the specified measurement frequencies explicitly or implicitly. In this case, it is necessary to specify the reporting time of the measurement frequency on which the UE performs CPM. For example, when the UE reports measurement results of a DL reference signal for positioning (e.g., PRS) or results derived from measurement, the UE may also report the (at least one) measurement frequency selected by the UE. In this case, a specific validity period related to the UE reporting may be defined separately. That is, reporting the measurement results or the results derived from the measurement for one of the multiple measurement frequencies configured by the gNB (or location server) may be valid until the UE reports measurement results or results described from another measurement frequency among the multiple frequencies configured by the gNB (or location server). In other words, the gNB may consider the multiple measurement frequencies to be valid until the gNB receives from the UE CPM results and a report on at least one measurement frequency on which CPM is performed (that is, the aforementioned validity period may last from the time the multiple measurement frequencies are configured until the UE reports the measurement results and the measurement frequency.) Meanwhile, the multiple measurement frequencies may be applied to perform DL CPM or UL CPM.

The single/multiple measurement frequencies for CPM described in Option 1 and Option 2 may be mapped to a frequency layer, but the single/multiple measurement frequencies may also be mapped to each TRP (or smaller units). For example, the single/multiple measurement frequencies for CPM may be mapped to each PRS resource, or the single/multiple measurement frequencies for CPM may be mapped to each PRS resource set.

(2) Scenario 2: Frequency report by UE for CPM

The UE may provide information about the measurement frequency to the gNB based on a method in relation to reporting of CPM measurement results, which will be described later, even without the configuration of the measurement frequency related to CPM from the gNB (or location server).

Specifically, during a capability report process where the UE reports its positioning capability to the gNB (or location server), the UE may indicate/report the measurement frequency for each specific frequency to the gNB (or location server). The reference point for indicating/reporting the measurement frequency for each specific frequency and the method for representing the frequency offset may be based on the methods described in Section 1. Here, the measurement frequency for each specific frequency may be one measurement frequency per BWP for UE positioning, or the measurement frequency may be one measurement frequency per resource unit in the frequency domain, which is predefined/agreed upon. Alternatively, during the 'assistance data transfer' procedure (by the UE), where the UE provides additional information to the gNB (or location server), the UE may indicate/report the measurement frequency for each specific frequency to the gNB (or location server). Alternatively, during the procedure where the UE reports measurement results of a carrier phase or values derived from measurement to the gNB (or location server), the UE may indicate/report the measurement frequency for each specific frequency to the gNB (or location server).

Hereinafter, a specific method by which the UE selects and reports a measurement frequency for CPM according to the method of representing the measurement frequency and the method for indicating/configuring the measurement frequency will be described. It is assumed that the UE is indicated/configured with multiple measurement frequencies as described above and the UE selects a measurement frequency for CPM from among the multiple measurement frequencies.

The UE may select the measurement frequency for CPM from among the multiple measurement frequencies based on at least one factor such as a configured active DL BWP or a measurement gap. Here, the measurement gap (MG) refers to a duration during which the UE receives no DL signals or transmits no UL signals from/to the gNB or the serving cell.

Specifically, if the UE is configured with an MG and receives a PRS configuration for CPM within the gap, the UE may freely select the measurement frequency for CPM from among the multiple measurement frequencies configured by the gNB (or serving cell) within a positioning frequency layer (PFL) during the MG. On the other hand, if the UE does not receives the PRS configuration for CPM within the MG, the UE needs to remain within the active DL BWP, even if the BW of the configured PRS does not align with the active DL BWP configured for the UE (in other words, the UE may not adjust the active DL BWP to match the BW of the PRS). Therefore, when the UE performs phase measurement for the PRS based on the configured PRS configuration, the method by which the UE selects the measurement frequency for CPM may differ depending on whether the phase measurement based on the PRS configuration is performed within the MG or outside the MG. Additionally, when reporting the measurement for the indicated/configured PRS, the UE does not differentiate whether the measurement is performed within the MG or outside the MG.

Hereinafter, signaling methods will be described separately as follows: a signaling method between the gNB and LMF for specifying multiple measurement frequencies for CPM, a signaling method by which the gNB indicates/configures specified multiple measurement frequencies to the UE, a method by which the UE selects a measurement frequency for CPM from specified multiple measurement frequencies, and a signaling method by which the UE reports measurement results for CPM to the gNB. The following signaling methods may be carried out based on NR Positioning Protocol A (NRPPa) described with reference to FIG. 10.

(1) Signaling method between LMF and gNB for indicating multiple frequencies for phase measurement to UE

From the perspective of the LMF, the accuracy of positioning based on the measured phase may vary depending on the frequency on which the UE performs phase measurement. For example, the phase measurement based on the frequency band may differ depending on the UE capability, and the performance of positioning may vary based on the frequency band in which the UE operates and/or the frequency band where the phase measurement is performed. In other words, even if the phase measurement is performed on corresponding frequency bands between UEs, the measurement accuracy may differ depending on the performance of each UE, and the measurement accuracy may also vary based on the frequency band in which the UE operates and/or the frequency band where the phase measurement is performed.

Additionally, when differencing is performed for phase measurement based on CPM, the UE needs to receive PRS(s) from multiple gNBs (TRPs).

Therefore, when CPM-based positioning is performed, the LMF needs to manage (additionally) resources for frequencies in a PFL where phase measurement is performed, considering the differences in positioning accuracy mentioned above. Specifically, the LMF may inform the gNB of preferred multiple frequencies within the PFL. In other words, the LMF selects appropriate multiple frequency resources for phase measurement from the frequencies in the PFL, considering the differences in positioning accuracy between UEs and the differences in positioning accuracy across frequency bands. The LMF provides the gNB with preference information on the selected multiple frequency resources in advance.

The LMF may provide the gNB with PFL information where the preference (i.e., preference related to phase positioning) for multiple frequencies per PFL is indicated with a priority flag. For example, if four frequency layers (or measurement frequencies) are indicated per PFL, the preference for each frequency layer may be designated in order. In other words, when four frequency layers are indicated per PFL, the LMF may determine the priority among the frequencies and transmit the PFL information to the gNB, which includes the priority flag based on the determined priority.

Alternatively, when the LMF provides PFL information to the gNB, the LMF may indicate frequency bands specified by the PFL as a specific number (or frequencies divided into N frequency regions). Based on the PFL information, the gNB may configure an active DL BWP for the UE that performs PRS measurement based on CPM. For example, the gNB may configure the active DL BWP for the UE to include the frequency (or frequencies) that distinguish the PFL, which is configured or provided by the LMF in the PFL information. Alternatively, the gNB may configure the active DL BWP for the UE to exclude the frequency (or frequencies) that distinguish the PFL, which is configured or provided by the LMF in the PFL information.

(2) Signaling method between gNB and UE for indicating multiple frequencies for phase measurement to UE

The signaling between the gNB and the UE may include signaling from the gNB to the UE, as well as signaling from the UE to the gNB. Regarding the signaling provided by the gNB to the UE, the following may be considered.

The gNB (or LMF) may indicate/configure multiple measurement frequencies for CPM to the UE based on PFL information. In other words, the gNB may indicate multiple measurement frequencies based on the preferences of the LMF. Alternatively, the gNB may configure/indicate to the UE multiple measurement frequencies for phase measurement according to the preferences of the LMF within a frequency range indicated by the configured PFL (PRS resource set, PRS resource, etc.) through RRC/MAC-CE/DCI.

Alternatively, the gNB may configure an active DL BWP for the UE based on the PFL information (or the multiple measurement frequencies) and/or whether a separate MG is configured for the UE. If no separate MG is configured for the UE, the gNB may configure an active DL BWP for the UE performing CPM measurement, where the active DL BWP includes the multiple measurement frequencies (multiple frequencies distinguished by N frequency regions included in the PFL information and/or frequencies preferred by the LMF for CPM). Alternatively, the gNB may configure an active DL BWP for the UE performing CPM measurement, where the active DL BWP does not include the multiple measurement frequencies (if the multiple measurement frequencies indicated/configured by the gNB are not included in the active DL BWP, the UE may not report measurement results for CPM).

If the multiple frequencies (or preferred frequencies) configured or indicated by the LMF (or gNB) in the PFL are not included in the active DL BWP, the UE may report at least one preferred frequency (or the preference of frequencies) for CPM to the LMF (or gNB) through assistance data transfer or similar methods. The report may be made after the UE receives an indication for phase measurement based on CPM from the LMF (or gNB) and before the phase measurement is performed (or without performing the indicated phase measurement).

(3) Signaling related to UE measurement report or reporting of measurement results.

The UE may determine/select at least one measurement frequency from multiple measurement frequencies configured/indicated through signaling of the gNB and then report measurement results for the selected measurement frequency to the gNB.

Specifically, as described above, the UE may receive or derive multiple measurement frequencies for CPM (or measurement frequencies preferred by the LMF for CPM) from the gNB in a PFL, which is configured explicitly or implicitly, (via RRC/MAC-CE/DCI). Alternatively, the UE may derive multiple measurement frequencies (or frequencies preferred by the LMF for CPM) in the PFL based on a prior agreement, even without separate configurations of the multiple measurement frequencies. For example, similar to a synchronization raster, the UE may derive preferences (preferred by the LMF for CPM) based on a specific granularity in the frequency, even without separate configurations from the gNB. In this case, the gNB (or LMF) may expect the UE to report phase measurement results for the most preferred measurement frequency, based on the multiple measurement frequencies. However, the UE may also report CPM results for a measurement frequency not included in the multiple measurement frequencies, depending on the presence of an MG configuration and the relationship between the active DL BWP and the PFL.

In one example, the UE may determine whether to select the measurement frequency from among the multiple measurement frequencies configured/indicated by the gNB, based on the relationship between the MG, active DL BWP, and PFL. Specifically, if the UE performs phase measurement for a PRS within the MG, the UE may select one of the multiple measurement frequencies configured/indicated by the LMF (or gNB) and then measure the phase for CPM. Alternatively, if the UE performs the phase measurement for the PRS outside the MG, the UE may select a measurement frequency within the active DL BWP from among the multiple measurement frequencies and then perform CPM.

Alternatively, if the phase measurement for the PRS is performed outside the MG and/or if the multiple measurement frequencies are not included in the active DL BWP, the UE may select a measurement frequency other than the multiple measurement frequencies, as described in the following options.

- Option 1: The UE may select a frequency for performing the indicated phase measurement based on a specific reference frequency, according to the UE implementation.
- Option 2: The UE may select a frequency closest to or most adjacent to the multiple measurement frequencies (or frequencies preferred by the LMF) within the active DL BWP as the frequency for performing the phase measurement.
- Option 3: The UE may select a measurement frequency for performing the phase measurement that has an integer multiple relationship with any of the multiple measurement frequencies (or frequencies preferred by the LMF) within the active DL BWP.
- Option 4: The UE may select a predefined/agreed specific frequency (e.g., the highest or lowest frequency) within the active DL BWP as the measurement frequency for performing the phase measurement.

Alternatively, even when CPM for a PRS is performed within the MG, if the multiple measurement frequencies are not included in the active DL BWP, the UE may select a measurement frequency other than the multiple measurement frequencies within the active DL BWP based on at least one of Options 1 to 4.

Alternatively, if the UE does not have an available measurement frequency among the multiple measurement frequencies or is incapable of using a predefined default measurement frequency, the UE may select a measurement frequency for CPM based on one of Options 1 to 4.

Additionally, the UE may perform phase measurement on different frequencies at points both within and/or outside the MG for the same PFL according to the methods described above. In this case, even if the UE is instructed to provide a single report, the UE may report measurement results including phase measurement values for each of two or more measurement frequencies. For example, when the phase measurement is performed based on different frequencies inside and outside the MG for the same PFL, even if a single phase measurement for a single frequency in the PFL is instructed, the UE may report measurement results that include information on a first phase measured for a first frequency selected within the MG and a second phase measured for a second frequency selected outside the MG. This method may also be applied in cases where the active DL BWP changes due to BWP switching during the phase measurement process.

Alternatively, if the UE does not report the frequency on which the phase is measured in the measurement results, the gNB may treat or assume that the measurement results relate to the predefined default frequency.

In this way, the gNB may implicitly or explicitly instruct the UE to perform the phase measurement on multiple measurement frequencies preferred by the location server, thereby ensuring that the UE performs the phase measurement on the multiple measurement frequencies. Thus, the location server may expect or ensure the phase measurement on a measurement frequency capable of estimating the location of the UE with higher accuracy. Alternatively, even if the position measurement is not performed on the multiple measurement frequencies, the UE may perform the phase measurement on a frequency that has a predefined relationship with the multiple measurement frequencies. Thus, the location server may minimize the reduction in accuracy or ensure the selection of the measurement frequency within a predictable range.

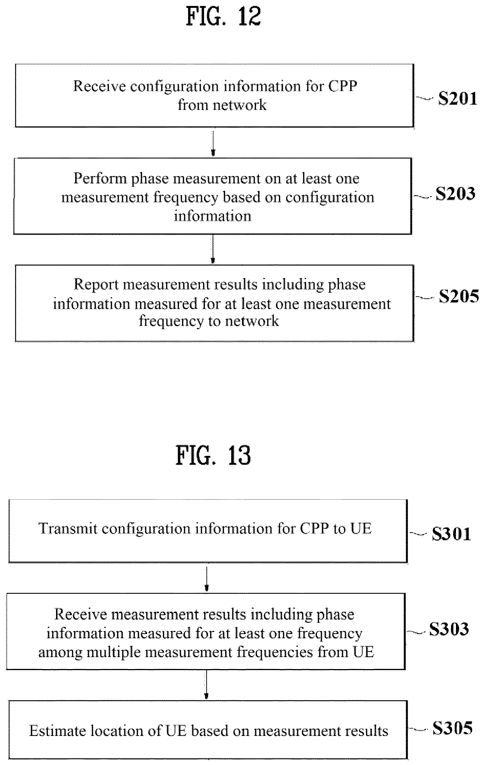

FIG. 12 is a diagram for explaining a method by which a UE performs phase measurement for positioning according to an embodiment.

Referring to FIG. 12, the UE may receive configuration information for the phase measurement (or CPM) from a network (gNB or location server) (S201). Here, the configuration information for the phase measurement may correspond to the configuration information for CPM as described above. In other words, the configuration information may include information about multiple measurement frequencies related to the execution of CPM and/or information about a PRS configuration related to the execution of CPM. In this case, the UE may identify the multiple measurement frequencies related to the phase measurement based on the configuration information. Hereinafter, for convenience of explanation, CPM is defined as carrier phase positioning (CPP).

For example, the multiple measurement frequencies may be specified through the configuration information using a reference measurement frequency and multiple measurement frequency offsets as described in Section 1. The UE may receive the reference measurement frequency and the multiple measurement frequency offsets based on the configuration information. The reference measurement frequency may be explicitly indicated in the configuration information or implicitly indicated through the configuration information. For instance, the reference measurement frequency may be determined/specified as a frequency corresponding to an ARFCN related to a PRS configuration and/or the starting PRB of a PRS included in the configuration information. Alternatively, the reference measurement frequency may correspond to the frequency of a DC carrier related to a DL or UL signal indicated by higher layer signaling from the network (e.g., RRC configuration). Alternatively, the reference measurement frequency may be specified as the frequency of a predefined RE related to the PRS indicated by the PRS configuration in the configuration information, without any separate indications or configurations. For example, the reference measurement frequency may be predefined/agreed upon as a frequency corresponding to an RE with the highest index, lowest index, or middle index among REs included in the PRS configuration. Moreover, the configuration information may include direct values or information about multiple frequency offsets based on the existing frequency domain grid, as described in the options in Section 1 (2).

Next, the UE may perform measurement on at least one measurement frequency based on the configuration information (S203). As described above, the measurement may be phase measurement based on CPP for the PRS corresponding to the at least one measurement frequency. In other words, the UE receives PRSs corresponding to the at least one measurement frequency and performs CPP for the at least one measurement frequency by performing the phase measurement on the received PRSs.

In one example, the UE may determine/select at least one measurement frequency for performing CPP based on the multiple measurement frequencies. Specifically, the UE may determine/select the at least one measurement frequency from among the multiple measurement frequencies based on the active DL BWP and/or MG configured by the network. Alternatively, the UE may determine/select a different frequency other than the multiple measurement frequencies as the at least one measurement frequency.

For example, if an MG is configured for the UE, the UE may determine the at least one measurement frequency differently depending on whether the measurement for the at least one frequency is performed within the MG. Specifically, if the measurement is not performed within the MG, the UE may select a measurement frequency that overlaps with the active DL BWP from among the multiple measurement frequencies as the at least one measurement frequency. Alternatively, if the measurement is performed within the MG, the UE may select at least one measurement frequency from among the multiple measurement frequencies without being restricted by the active DL BWP. In this case, the UE may consider its own measurement capabilities, channel conditions, and other factors to select/determine the at least one measurement frequency from among the multiple measurement frequencies.

Alternatively, regardless of whether the MG is configured or whether the measurement is performed within the MG, the UE may select/determine the at least one measurement frequency differently based on whether the multiple measurement frequencies are included in the active DL BWP. For example, if the UE is indicated with multiple measurement frequencies that are not included in the active DL BWP, the UE may not select any of the multiple measurement frequencies as the at least one measurement frequency. Specifically, based on that the multiple measurement frequencies are specified as not included in the active DL BWP, the UE may determine a predefined measurement frequency (e.g., as described in Options 1 to 4) rather than the multiple measurement frequencies as the at least one measurement frequency. In this case, the predefined measurement frequency may be a frequency within the active DL BWP that has an integer multiple relationship with one of the multiple measurement frequencies or a frequency within the active DL BWP that is closest to the multiple measurement frequencies. Alternatively, the predefined measurement frequency may be the lowest frequency within the active DL BWP or the highest frequency within the active DL BWP.

Next, the UE may report measurement results including phase information measured for the at least one measurement frequency to the network (S205). When reporting the measurement results, the UE may also include information about the at least one measurement frequency. Alternatively, the UE may only report the information about the at least one measurement frequency if the at least one measurement frequency is not selected from among the multiple measurement frequencies.

FIG. 13 is a diagram for explaining a method by which a network receives measurement results for positioning from a UE.

Referring to FIG. 13, the network may transmit configuration information related to positioning to the UE (S301). As described above, the network may indicate to the UE multiple measurement frequencies related to CPP through the configuration information according to the above-described representation methods. The configuration information may include information about the configuration of a PRS where the CPP is to be performed. Additionally, as explained above with reference to FIGS. 11 and 12, the network may explicitly or implicitly indicate/configure the multiple measurement frequencies. It may be assumed/determined that the multiple measurement frequencies are specified according to predefined configurations.

Next, the network may receive the measurement results from the UE, which include phase information measured for at least one frequency among the multiple measurement frequencies (S303). As described above with reference to FIG. 12, the network may expect that the UE will select at least one measurement frequency from among the multiple measurement frequencies and reports the measurement results including the phase information for the selected at least one measurement frequency. Additionally, the network may determine that the phase information is measured for the at least one measurement frequency, which is selected/determined from among the multiple measurement frequencies or within the active DL BWP, based on the active DL BWP, MG, etc. The measurement results may also include information about the at least one measurement frequency. Alternatively, the network may configure the active DL BWP to include all or some of the multiple measurement frequencies for the UE. Alternatively, as mentioned earlier, the network may receive from the UE measurement results including phase information measured for a measurement frequency other than the multiple measurement frequencies.

The network may estimate the location of the UE based on the measurement results (S305). The network may perform differencing related to CPP based on the phase information measured by the UE for PRSs transmitted by multiple TRPs and/or phase information measured by multiple UEs for the measurement frequency. Then, the network may accurately estimate the location of the UE based on the differencing.

In this way, the gNB may implicitly or explicitly indicate to the UE multiple measurement frequencies preferred by the location server, thereby ensuring that the UE performs phase measurement on the multiple measurement frequencies. Thus, the location server may expect or ensure the phase measurement on a measurement frequency capable of estimating the location of the UE with higher accuracy. Alternatively, even if the position measurement is not performed on the multiple measurement frequencies, the UE may perform the phase measurement on a frequency that has a predefined relationship with the multiple measurement frequencies. Thus, the location server may minimize the reduction in accuracy or ensure the selection of the measurement frequency within a predictable range.

**Communication** system example **to which the present disclosure is applied**

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

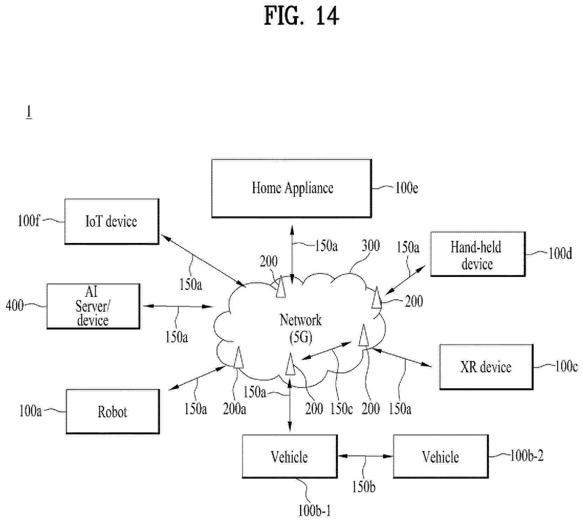

FIG. 14 illustrates a communication system applied to the present disclosure.

Referring to FIG. 14, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (EA4D), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/DL communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

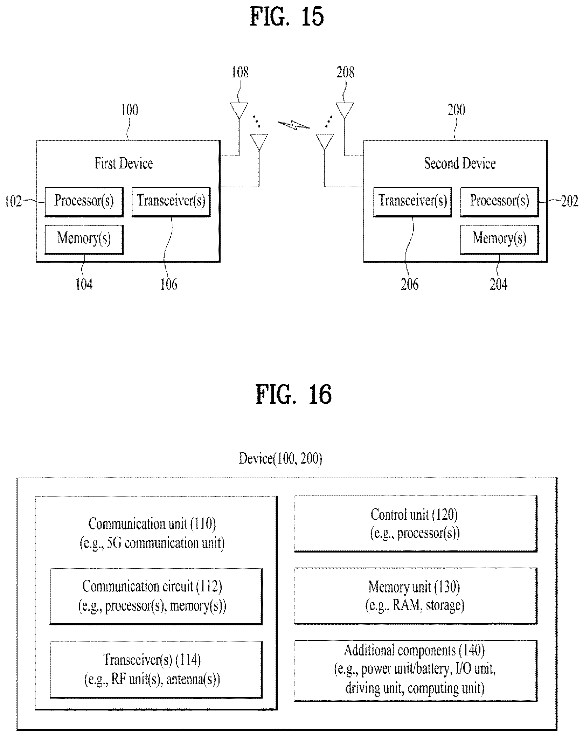

FIG. 15 illustrates a wireless device applicable to the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to an embodiment, the first wireless device 100 or a UE may include the processor(s) 102 connected to the RF transceiver(s) and the memory(s) 104. The memory(s) 104 may include at least one program for performing operations related to the embodiments described above with reference to FIGS. 10 to 13.

Specifically, the processor(s) 102 may be configured to: control the RF transceiver(s) 106 to receive configuration information related to position measurement from a network; perform measurement on at least one measurement frequency based on the configuration information; and report measurement results for the at least one measurement frequency to the network. The at least one measurement frequency may be determined based on a plurality of measurement frequencies for CPP specified based on the configuration information. The measurement results may include phase information measured for the at least one measurement frequency.

Alternatively, a chipset including the processor(s) 102 and the memory(s) 104 may be configured. The chipset may include: at least one processor; and at least one memory operably connected to the at least one processor and configured to, when executed, cause the at least one processor to perform operations. The operations may include: receiving configuration information related to position measurement from a network; performing measurement on at least one measurement frequency based on the configuration information; and reporting measurement results for the at least one measurement frequency to the network. The at least one measurement frequency may be determined based on a plurality of measurement frequencies for CPP specified based on the configuration information. The measurement results may include phase information measured for the at least one measurement frequency.

Alternatively, there is provided a computer-readable storage medium including at least one computer program configured to cause at least one processor to perform operations. The operations may include: receiving configuration information related to position measurement; performing measurement on at least one measurement frequency based on the configuration information; and reporting measurement results for the at least one measurement frequency. The at least one measurement frequency may be determined based on a plurality of measurement frequencies for CPP specified based on the configuration information. The measurement results may include phase information measured for the at least one measurement frequency. In addition, the computer program may include programs for performing operations related to the embodiments described in FIGS. 10 to 13.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

According to an embodiment, the BS or a network may include the processor(s) 202, the memory(s) 204, and/or the transceiver(s) 206. The processor(s) 202 may be configured to: control the transceiver(s) 206 or RF transceiver to transmit configuration information related to position measurement; and receive measurement results for at least one measurement frequency measured based on the configuration information. The configuration information may indicate a plurality of measurement frequencies for CPP, and the measurement results may include phase information measured for the at least one measurement frequency determined based on the plurality of measurement frequencies.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of application of wireless devices to which the present invention is applied

FIG. 16 illustrates another example of a wireless device applied to the present disclosure.

Referring to FIG. 16, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the handheld device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology may generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

## INDUSTRIAL APPLICABILITY

The above-described embodiments of the present disclosure are applicable to various mobile communication systems.

## Claims

1. A method for performing a measurement for a positioning by a UE (user equipment) in a wireless communication system, the method comprising:

   receiving configuration information related to a position measurement from a network;
   performing the measurement for at least one measurement frequency based on the configuration information; and
   reporting a measurement result for the at least one measurement frequency to the network,
   wherein the UE specifies a plurality of measurement frequencies for a CPP (Carrier Phase Positioning) based on the configuration information, and determines the at least one measurement frequency based on the plurality of measurement frequencies, and
   wherein the measurement result includes phase information measured for the at least one measurement frequency.

2. The method according to claim 1, wherein the plurality of measurement frequencies are specified by a reference measurement frequency and a plurality of measurement frequency offsets indicated based on the configuration information.

3. The method according to claim 2, wherein the reference measurement frequency is specified based on the ARFCN (Absolute Radio Frequency Channel Number) or the starting PRB (Physical Resource Block) of a PRS (Positioning Reference Signal) related to a PRS configuration included in the configuration information.

4. The method according to claim 2, wherein the reference measurement frequency is specified based on a frequency of a DC carrier associated with the downlink signal or uplink signal.

5. The method according to claim 2, wherein the reference measurement frequency is determined based on indexes of REs (resource elements) included in a PRS (Positioning Reference Signal) configuration included in the configuration information.

6. The method according to claim 1, wherein the at least one measurement frequency is determined based on at least one of the plurality of measurement frequencies, an active downlink BWP (Bandwidth Part) configured for the UE, and a measurement gap.

7. The method according to claim 1, wherein, based on the plurality of measurement frequencies that are not included in the active downlink BWP, the at least one measurement frequency is determined as a predefined measurement frequency other than the plurality of measurement frequencies.

8. The method according to claim 7, wherein the predefined measurement frequency is a frequency that is an integer multiple of any one of the plurality of measurement frequencies within the active downlink BWP or a frequency that is closest to the plurality of measurement frequencies within the active downlink BWP.

9. The method according to claim 7, wherein the predefined measurement frequency is the lowest frequency within the active downlink BWP or the highest frequency within the active downlink BWP.

10. The method according to claim 6, wherein the at least one measurement frequency is determined differently depending on whether the measurement for the at least one measurement frequency is performed within the measurement gap.

11. A UE (user equipment) for performing a measurement for a positioning in a wireless communication system, the UE comprising:

   a radio frequency (RF) transceiver; and
   a processor connected to the RF transceiver,
   wherein the processor is configured to:

   receive configuration information related to a position measurement from a network;
   perform the measurement for at least one measurement frequency based on the configuration information; and
   report a measurement result for the at least one measurement frequency to the network,
   wherein the at least one measurement frequency is determined based on a plurality of measurement frequencies for a specified CPP (Carrier Phase positioning) based on the setting information, and
   wherein the measurement result includes phase information measured for the at least one measurement frequency.

12. A method of receiving a measurement result for a positioning from a UE (user equipment) by a network in a wireless communication system, the method comprises:

   transmitting configuration information related to positioning;
   receiving a measurement result for at least one measurement frequency measured based on the configuration information,
   wherein the configuration information indicating a plurality of measurement frequencies for CPP (Carrier Phase Positioning), and

wherein the measurement result including phase information measured for at least one measurement frequency determined based on the plurality of measurement frequencies.

13. The method according to claim 12, wherein the network configures an active downlink BWP (Bandwidth Part) for the UE so as to include the above multiple measurement frequencies.

14. A chipset for performing measurements for positioning a UE (user equipment) in a wireless communication system, the chipset comprising:

   at least one processor; and
   at least one memory operatively connected to the at least one processor and configured to, when executed, cause the at least one processor to perform operations,
   wherein the operation comprises:

   receiving configuration information related to a position measurement from a network;
   performing the measurement for at least one measurement frequency based on the configuration information; and
   reporting a measurement result for the at least one measurement frequency to the network,
   wherein the at least one measurement frequency is determined based on a plurality of measurement frequencies for a specified CPP (Carrier Phase positioning) based on the setting information, and
   wherein the measurement result includes phase information measured for the at least one measurement frequency.

15. A computer-readable storage medium including at least one computer program in a wireless communication system, comprising:

   at least one computer program configured to cause the at least one processor to perform an operation related to measurement for positioning of a UE (user equipment); and
   a computer-readable storage medium configured to store the at least one computer program,
   wherein the operation includes:

   receiving configuration information related to a position measurement from a network;
   performing the measurement for at least one measurement frequency based on the configuration information; and
   reporting a measurement result for the at least one measurement frequency to the network
   wherein the at least one measurement frequency is determined based on a plurality of measurement frequencies for a specified CPP (Carrier Phase positioning) based on the setting information, and
   wherein the measurement result includes phase information measured for the at least one measurement frequency.

# FIG. 1

# FIG. 2

# FIG. 3

# FIG. 4

Resource grid

A carrier
( up to 3300 subcarriers, i.e., 275 RBs )

A BWP

1 RB = 12 subcarriers

1 RE

1 subcarrier

1 symbol

l = 0  · · ·

k = 0

# FIG. 5

Initial Cell Search | System Information Reception | Random Access Procedure | General DL/UL Tx/Rx S18

| P/S - SCH & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11  S12  S13  S14  S15  S16  S17

• DL/UL ACK/NACK
• UE CQI/PMI/Rank Report using PUSCH and PUCCH

# FIG. 6

Reference Source

GNSS signals (B)

LPP

Measurements(A,B or A+B) or Location

Assistance Data

Target Device

UE/SET

Location server

E-SMLC/SLP/LMF

radio signals (A)

Reference Source

ACCESS NODE / BS / TS / NG-RAN

NRPPa

- E-CID Location Information Transfer
- OTDOA Information Transfer
- Reporting of General Error Situations

## FIG. 7

# FIG. 8

EP 4 518 466 A1

# FIG. 9

| UE | NR-Uu<br>LTE-Uu | NG RAN | NG-C | AMF | NLs | LMF |
|----|-----------------|--------|------|-----|-----|-----|
| LPP | | | | | | LPP |
| NAS | | Relay<br>RRC / NGAP | | Relay<br>NAS / HTTP/2 | | HTTP/2 |
| RRC | | | | NGAP | | |
| PDCP | | PDCP / SCTP | | SCTP / TLS | | TLS |
| | | | | / TCP | | TCP |
| RLC | | RLC / IP | | IP / IP | | IP |
| MAC | | MAC / L2 | | L2 / L2 | | L2 |
| L1 | | L1 / L1 | | L1 / L1 | | L1 |

EP 4 518 466 A1

# FIG. 10

| NRPPa | | | | NRPPa |
| NGAP | NGAP | HTTP/2 | | HTTP/2 |
| SCTP | SCTP | TLS | | TLS |
| | | TCP | | TCP |
| IP | IP | IP | | IP |
| L2 | L2 | L2 | | L2 |
| L1 | L1 | L1 | | L1 |

NG-C      NLs

NG RAN             AMF             LMF

FIG. 11

# FIG. 12

| Receive configuration information for CPP from network | ~ **S201** |

↓

| Perform phase measurement on at least one measurement frequency based on configuration information | ~ **S203** |

↓

| Report measurement results including phase information measured for at least one measurement frequency to network | ~ **S205** |

# FIG. 13

| Transmit configuration information for CPP to UE | ~ **S301** |

↓

| Receive measurement results including phase information measured for at least one frequency among multiple measurement frequencies from UE | ~ **S303** |

↓

| Estimate location of UE based on measurement results | ~ **S305** |

# FIG. 14

# FIG. 15

First Device 100

102 — Processor(s)

Transceiver(s)

Memory(s)

104          106

108

208

Second Device 200

Transceiver(s)          Processor(s) —202

Memory(s)

206          204

# FIG. 16

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

48

# EP 4 518 466 A1

<table>
<tr><td colspan="2" align="center"><strong>INTERNATIONAL SEARCH REPORT</strong></td><td colspan="2">International application No.<br><strong>PCT/KR2023/005802</strong></td></tr>
</table>

**A.   CLASSIFICATION OF SUBJECT MATTER**

**H04W 64/00**(2009.01)i; **H04W 24/08**(2009.01)i; **H04W 72/0457**(2023.01)i; **H04L 5/00**(2006.01)i; **G01S 19/44**(2010.01)i

According to International Patent Classification (IPC) or to both national classification and IPC

**B.   FIELDS SEARCHED**

Minimum documentation searched (classification system followed by classification symbols)

H04W 64/00(2009.01); G01S 5/02(2010.01); H04W 24/00(2009.01); H04W 24/10(2009.01); H04W 56/00(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CPM(carrier phase measurement), CPP(Carrier Phase Positioning), 측정 (measurement), 위상(phase), 보고(report), 주파수(frequency), 측정 갭(measurement gap), BWP(bandwidth part)

**C.   DOCUMENTS CONSIDERED TO BE RELEVANT**

| Category* | Citation of document, with indication, where appropriate, of the relevant passages | Relevant to claim No. |
|---|---|---|
| X | KR 10-2020-0105506 A (CHINA ACADEMY OF TELECOMMUNICATIONS TECHNOLOGY) 07 September 2020 (2020-09-07)<br>    See paragraphs [0138] and [0178]; claims 1-3 and 7-8; and figure 1. | 1-5,11-12,14-15 |
| Y | | 6-10,13 |
| Y | CN 104159241 A (HUAWEI TECHNOLOGIES CO., LTD.) 19 November 2014 (2014-11-19)<br>    See claim 2. | 6-10 |
| Y | KR 10-2021-0116489 A (QUALCOMM INCORPORATED) 27 September 2021 (2021-09-27)<br>    See paragraph [0223]; and claim 9. | 6-10,13 |
| A | KR 10-2021-0138084 A (DATANG MOBILE COMMUNICATIONS EQUIPMENT CO., LTD.) 18 November 2021 (2021-11-18)<br>    See paragraphs [0125]-[0168]. | 1-15 |

✓ Further documents are listed in the continuation of Box C.   ✓ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"   later document published after the international filing date or priority date and not in conflict with the application but cited to understand the principle or theory underlying the invention

"X"   document of particular relevance; the claimed invention cannot be considered novel or cannot be considered to involve an inventive step when the document is taken alone

"Y"   document of particular relevance; the claimed invention cannot be considered to involve an inventive step when the document is combined with one or more other such documents, such combination being obvious to a person skilled in the art

"&"   document member of the same patent family

| Date of the actual completion of the international search | Date of mailing of the international search report |
|---|---|
| **11 August 2023** | **16 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/005802**

### C. DOCUMENTS CONSIDERED TO BE RELEVANT

| Category* | Citation of document, with indication, where appropriate, of the relevant passages | Relevant to claim No. |
|---|---|---|
| A | KR 10-2022-0009460 A (DATANG MOBILE COMMUNICATIONS EQUIPMENT CO., LTD.) 24 January 2022 (2022-01-24)<br>    See paragraphs [0119]-[0247]. | 1-15 |

Form PCT/ISA/210 (second sheet) (July 2022)

**INTERNATIONAL SEARCH REPORT**
**Information on patent family members**

International application No.

**PCT/KR2023/005802**

| Patent document cited in search report | | | Publication date (day/month/year) | Patent family member(s) | | | Publication date (day/month/year) |
|---|---|---|---|---|---|---|---|
| KR | 10-2020-0105506 | A | 07 September 2020 | CN | 110062457 | A | 26 July 2019 |
| | | | | CN | 110062457 | B | 26 January 2021 |
| | | | | EP | 3742829 | A1 | 25 November 2020 |
| | | | | JP | 2021-511508 | A | 06 May 2021 |
| | | | | JP | 7266040 | B2 | 27 April 2023 |
| | | | | US | 11353542 | B2 | 07 June 2022 |
| | | | | US | 2020-0408871 | A1 | 31 December 2020 |
| | | | | WO | 2019-141090 | A1 | 25 July 2019 |
| CN | 104159241 | A | 19 November 2014 | CN | 104159241 | B | 22 December 2017 |
| KR | 10-2021-0116489 | A | 27 September 2021 | AU | 2020-211927 | A1 | 30 July 2020 |
| | | | | BR | 112021013323 | A2 | 14 September 2021 |
| | | | | CN | 113302994 | A | 24 August 2021 |
| | | | | EP | 3915308 | A1 | 01 December 2021 |
| | | | | JP | 2022-518167 | A | 14 March 2022 |
| | | | | TW | 202033028 | A | 01 September 2020 |
| | | | | US | 2020-0235877 | A1 | 23 July 2020 |
| | | | | WO | 2020-154289 | A1 | 30 July 2020 |
| KR | 10-2021-0138084 | A | 18 November 2021 | CN | 111726857 | A | 29 September 2020 |
| | | | | CN | 111726857 | B | 20 July 2021 |
| | | | | CN | 113438724 | A | 24 September 2021 |
| | | | | CN | 113438724 | B | 25 March 2022 |
| | | | | EP | 3944680 | A1 | 26 January 2022 |
| | | | | US | 2022-0166531 | A1 | 26 May 2022 |
| | | | | WO | 2020-186959 | A1 | 24 September 2020 |
| KR | 10-2022-0009460 | A | 24 January 2022 | CN | 112073894 | A | 11 December 2020 |
| | | | | CN | 112073894 | B | 22 March 2022 |
| | | | | EP | 3979670 | A1 | 06 April 2022 |
| | | | | JP | 2022-534088 | A | 27 July 2022 |
| | | | | JP | 7267463 | B2 | 01 May 2023 |
| | | | | US | 2022-0236362 | A1 | 28 July 2022 |
| | | | | WO | 2020-238639 | A1 | 03 December 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **LEE, HONGKYU**. An Instantaneous Integer Ambiguity Resolution for GPS Real-Time Structure Monitoring. *Journal of Korean Society of Civil Engineers*, 2014, vol. 34 (1), 342-353